# EUROPEAN PATENT SPECIFICATION

(11) **EP 1 536 609 B1**
(45) Date of publication and mention of the grant of the patent: **11.03.2009**
(21) Application number: 04026382.4
(22) Date of filing: 05.11.2004
(51) Int. Cl.: H04L 29/06

(54) **Systems and methods for authenticating communications in a network**
Systeme und Verfahren zur Authentifizierung von Übertragungen in einem Netzwerk
Systèmes et méthodes d'authentification des communications dans un réseau

(30) Priority: 10.11.2003 US 703437
(43) Date of publication of application: 01.06.2005
(73) Proprietor: Xerox Corporation, Rochester, New York 14644 (US)
(72) Inventor: Smetters, Diana K., San Francisco CA 94131 (US); Conley, Kenneth W., Mountain View CA 94040 (US); Pendleton, Bryan A., Menlo Park CA 94025 (US); Durfee, Glenn E., San Francisco CA 94117 (US); Cousins, Steve B., Cupertino CA 95014 (US); Balfanz, Dirk, Menlo Park CA 94025 (US); Shemtov, Hadar, Palo Alto CA 94303 (US)
(74) Representative: Grünecker, Kinkeldey, Stockmair & Schwanhäusser Anwaltssozietät

(56) References cited:
- WO-A-01/31836
- US-A1- 2002 156 795
- US-A1- 2003 149 874

## Description

This invention relates to systems and methods for authenticating secure communications between at least two devices.

Public key cryptography has not been readily adopted due in large part to the "key management problem," which refers to the difficulty users have in reliably identifying the public keys of their intended communication partners. One approach used to address this problem is to construct a public key infrastructure (PKI). This approach designates one or more trusted public keys known by the members of the public key infrastructure. The computer system that stores the private keys corresponding to the trusted public keys can sign digital certificates containing the public keys of users and devices in the public key infrastructure. This process authenticates the public keys of the public key infrastructure members.

Public key infrastructures ameliorate some problems in providing authenticated copies of particular individuals' or devices' public keys to those individuals and devices that need to rely on these keys. In public key infrastructure, the owner of a trusted key is usually termed a "Certification Authority", or CA. Those trusted keys are used to authenticate the keys of other members (users and devices) of that public key infrastructure by signing the keys for the members, thus creating a "digital certificate". Such a certificate typically uses this trusted signature to link a public key to information indicating 1) who owns the key (an identity certificate), 2) what the key is allowed to be used for (an attribute certificate), or, at the very minimum, 3) that the bearer of the corresponding private key is a valid member of this particular public key infrastructure or other trust system.

Such a public key infrastructure simplifies the key management problem, as the number of keys that must be exchanged goes, by definition, from many down to the number of the trusted public keys. As long as the information contained in a member's certificate is sufficient to indicate to the verifier of that certificate that they are communicating with their intended party, the signature on that certificate is enough to let them know that the public key contained in that certificate belongs to a trusted entity.

Unfortunately, creation and management of public key infrastructures, as well as distribution of certificates, have turned out to be incredibly difficult and complex. Even establishing small special-purpose public key infrastructures to support the use of public key cryptography for one application within one organization is generally considered to be too expensive and difficult. One reason for this is that the available software is complicated, expensive, and requires deep knowledge of standards and cryptography to be effectively configured. As a result, despite that using public key cryptography can dramatically increase the security of many communications protocols relative to, for example, password-based alternatives, protocol designers are forced to move to less secure alternatives that do not require the "burden" of establishing a public key infrastructure. Similarly, this cost of setting up a public key infrastructure keeps individuals from considering larger-scale use of public key cryptography in embedded devices (e.g. cell phones, printers, etc), as each of these devices would have to be "provisioned" with a certificate before use. This key management and distribution problem also exists with any secure credential infrastructure that uses credential-issuing authority to issue credentials.

U.S. patent application 10/066,669 to Balfanz et al. discloses one technique for avoiding some of the limitations of public key infrastructures when attempting to set up secure or trusted communications between various participants. The techniques disclosed in the 699 application are particularly useful when dealing with an ad-hoc group of participants that has come together for a limited time and/or for a limited purpose. As disclosed in the 699 application, a group manager or the like transmits pre-authentication information over location-limited channels to each of the other participants in the group. Such location-limited channels can include infrared channels and/or audio channels, or the like.

By transmitting such pre-authentication information over such location-limited channels, an arbitrary peer-to-peer ad-hoc network can be securely authenticated. For example, in various exemplary embodiments, each participant in the group commits to a given public key using the location-limited channel. A key exchange protocol using public key cryptography can then be used over the main network links, such as wireless or wired links, to establish secure communications. By pre-authenticating the users' devices using public keys, the types of media usable as location-limited channels do not need to be immune to eavesdropping and can include, for example, audio and/or infrared channels.

Other conventional techniques for exchanging public keys of a public key infrastructure are also known. In a centralized public key infrastructure, trusted certification authority certificates are distributed by installing them in operating system or web browser software; or users who have an out-of-band way of authenticating a new root certificate can retrieve it from a directory or a web site. These certification authority public keys can then be used to verify the certificates of peers received as part of various authentication or key exchange protocols.

When keys are not part of a public key infrastructure, such keys must be exchanged or retrieved on an individual basis. That is, for such keys, because they are not part of a public key infrastructure, there is no trusted certification authority that can be used to authenticate a key received via an untrusted source. There are various techniques in common use to exchange public keys in these ad-hoc, peer-to-peer, or "web of trust" based networks. Many of these techniques use removable media to carry credentials such as public keys. For example, CD-ROM disks and other writeable or rewriteable disk storage devices are often used to carry user's public PGP keys.

Users meeting in person will present each other with a copy of their public PGP key, often by means of such a storage device. They will then digitally sign each other's public key, establishing that they have decided to "trust" that the key so presented belongs to the individual (or email address) in question. That signature is then stored by the user who owns the key, and additionally may be stored with that key in a networked directory. Users wishing to obtain the public key of another user then go to such a directory to retrieve the key, and determine whether there is a signature on that key made by one of the keys that they have decided to trust, or, recursively, by one of the keys, that the holder of a key they trust, has decided to trust, and so on.

Keys can also be manually exchanged by floppy, but this is highly inefficient, and not commonly done. First, it is only appropriate for devices in physical proximity to one another. PGP, a system primarily used for securing email, focuses on the ability to obtain public keys for users one has never met.

Given the inefficiencies of manually exchanging public keys by floppy disk, it is much more common to retrieve a signed key from a directory server, or to retrieve a key from a directory server and authenticate it by comparing the received key to its "fingerprint". Fingerprints are compressed representations of keys and are usually obtained over an authenticated channel, such as by having a key's owner read the corresponding fingerprint over the telephone, or by typing in a fingerprint that has been printed on a business card. While this is an appealing approach, it requires manual intervention by a person to establish trust in the key "fingerprint". This manual intervention requires the user involved to understand a fair amount about public key cryptography, such as, for example, what a fingerprint is, why a user needs to verify the fingerprint, etc.

The techniques presented in the 699 application take this idea of authenticating a public key by a "fingerprint", and provide a mechanism to automate that authentication process. This mechanism uses a second, trusted, "location-limited" channel to allow devices to verify each other's key fingerprints, and/or other functions of their public keys, and to require the user to only indicate, via the demonstrative property of the location-limited channel, which other device the user wants to communicate securely with. The exchange mechanism presented in the 699 application provides a simple, efficient, and useable technique to securely exchange public keys and establish trust between ad-hoc groups of devices.

However, the techniques described in the 699 patent require each participant to have a device capable of communicating over a particular location-limited channel. For example, if one participant in an ad-hoc network did not have the ability to receive or transmit infrared signals, that participant would not be able to obtain or transmit the pre-authentication information and thus would be locked out of the ad-hoc group that uses infrared signals as the location-limited channel. At the same time, the location-limited channels discussed in the 699 patent tend to be low-bandwidth channels that cannot be used efficiently to transmit significant amounts of data.

US 2002/0156795 A1 relates to a system and method for enabling communication and arbitrary components wherein the communication system includes a first set of components associated with universal interfaces, which can be implemented by a second set of components, the first set and second set of components using different communication mediums or protocols.

The object of the invention is to provide systems and methods for efficiently exchanging authentication credentials between members of a group wishing to securely exchange information between participants in the group.

This object is solved by the subject matter of the independent claims. Preferred embodiments are subject matter of the dependent claims.

This invention separately provides systems and methods for exchanging authentication credentials using a location-limited physical token channel.

In various exemplary embodiments of systems and methods according to this invention, a location-limited channel is implemented using physical exchanges of physical tokens as the location-limited channel. In various exemplary embodiments, the physical tokens are implemented using writeable and re-writeable storage media, such as writeable or re-writeable CD-ROMs, USB storage devices and the like.

Pre-authentication protocols are resistant to eavesdropping and they require that active detectable attacks be mounted in order to interfere. Location-limited channels, when used to implement such pre-authentication protocols, provide demonstrative identification and authenticity. Demonstrative identification describes channels that identify the participating devices physically by, for example, allowing a user to point at or hear a device, as disclosed in the 699 application. Implementing pre-authentication protocols using location-limited channel physical token exchanges provides demonstrative identification when the physical tokens are exchanged between participants and inserted into a participating device.

Authenticity describes channels that either deny the ability for attackers to participate in the secure communication, or that make any such participation by attackers detectable. Pre-authentication protocols implemented using location-limited physical tokens channel have authenticity so long as either the attacker is not one of the participants or it is not possible to steal or otherwise replace the genuine location-limited physical token channel with a fraudulent location-limited physical token channel.

In various exemplary embodiments of the systems and methods according to this invention, a group originator wishing to establish secure communications between a group of participants loads the originator's pre-authentication information and the originator's location on the network or other device used to provide these secure communications onto the location-limited physical token channel. The originator then passes the location-limited physical token channel to one of the other participants of the group. That participant connects the location-limited physical token channel to that participant's communication device and copies the originator's pre-authentication information and location onto that participant's communication device. That participant then adds that participant's own pre-authentication information and the location of that participant's communication device on the network onto the location-limited physical token channel.

That participant then passes the location-limited physical token channel to the next participant. That next participant also copies the originator's pre-authentication information and location from the location-limited physical token channel onto that next participant's communication device and copies that next participant's pre-authentication information and location onto the location-limited physical token channel. The next participant then passes the location-limited physical token channel to yet another participant. This continues until the last participant passes the location-limited physical token channel back to the group originator.

When the group originator connects the location-limited physical token channel to the originator's communication device, the originator is provided with all of the pre-authentication information and locations for all the other participants. The originator can then establish a secure connection with each of the participants based on that information by providing the pre-authentication information and location of each of the other participants to each participant in the group.

These and other features and advantages of the invention are described in, or are apparent from, the following detailed description of various exemplary embodiments of the systems and methods according to this invention.

Various exemplary embodiments of the invention are described in detail, with reference to the following figures, wherein:

Fig. 1 illustrates one exemplary situation in which the systems and methods according to this invention may be used;

Fig. 2 illustrates one exemplary embodiment of a communication authenticating system according to this invention;

Fig. 3 illustrates in greater detail one exemplary embodiment of the communication authenticating system according to this invention;

Fig. 4 is a flowchart outlining one exemplary embodiment of a method for authenticating communication using a location-limited physical token channel according to this invention;

Fig. 5 is a flowchart outlining in greater detail a first exemplary embodiment of the method for collecting pre-authentication information to a location-limited physical token channel according to this invention;

Fig. 6 is a flowchart outlining in greater detail a first exemplary embodiment of the method for distributing the collected pre-authentication information contained within the location-limited physical token channel to the other participants of the group according to this invention;

Fig. 7 is a flowchart outlining in greater detail a second exemplary embodiment of the method for collecting pre-authentication information using a location-limited physical token channel according to this invention;

Fig. 8 is a flowchart outlining in greater detail a second exemplary embodiment of the method for distributing the collected pre-authentication information contained within the location-limited physical token channel to the other participants of the group according to this invention;

Fig. 9 illustrates one exemplary embodiment of a user's system device according to this invention;

Fig. 10 illustrates how controlled exchanges of the location-limited physical token channel prevents eavesdroppers from participating in the group; and

Fig. 11 illustrates subsequent wireless communications between authenticated participants that includes non-authenticated bystanders according to this invention.

In various exemplary embodiments of systems and methods according to this invention, pre-authenticating the network-connected devices of the participants of a group is used to securely enable and/or authenticate arbitrary peer-to-peer ad-hoc interactions between the participants of the group. Such pre-authentication techniques or methods can include a bootstrap to a key exchange protocol that is used to set up an encrypted channel.

It should be appreciated that, in contrast to PGP and similar techniques, the systems and methods according to this invention do not require webs of trust to ensure that one participant is adequately authenticated to a second participant. That is, in the systems and methods according to this invention, unlike PGP and similar techniques, there is no reliance on a web of trusted parties, no indirection, nor any other reliance on any assumption about the authenticity of the parties to the secure communication, such as that used in PGP, floppy-based verification of SSL or any other public-key-based system.

Various systems and methods are directed to constructing a secure credential infrastructure. Such secure credential infrastructures include wired and wireless networks that use keys, such as, for example, secret keys, or public-private key pairs, to encrypt information sent over a network, such that the data representing the encrypted information only carries meaning to those computers that have the correct key. Such secure credential infrastructures also include a credential infrastructure that allows devices to use credentials to authenticate to other members, or to use credentials to authenticate to other members or service providers. One such use is to, for example, log onto a Windows domain using a smart card that has a credential stored within it.

Such secure credential infrastructures can be applied to public key infrastructures, to wireless networks, such as, for example, wireless networks that use WEP encryption, or other wireless encryption standards, to wired networks, and/or to hybrid networks. Various systems and methods can be used to add target devices to a public key infrastructure (PKI) and thus, construct a public key infrastructure having member devices. Although the following detailed description is directed towards a secure credential infrastructure, it should be appreciated that various systems and methods can be applied as well to a public key infrastructure.

Pre-authentication methods for a credential issuing device can be used to establish trust between a credential issuing device and various prospective member devices. For example, in various systems, several devices would use one or more pre-authentication methods to establish mutual trust. One of those devices would be designated as a credential issuing device, or its trusted representative. The other devices would be considered prospective members of the credential infrastructure in question. Once trust has been established, using one ore more pre-authentication methods, in the form of either direct trust in the public key of the prospective member device for which that prospective member device is to be issued a credential, or a secure connection between the issuing device and the prospective member devices authenticated using one or more pre-authentication methods, the prospective member devices can be provisioned with a credential and consequently become a member device of a secure credential infrastructure associated with the credential issuing device.

In various other systems, the participants use one or more pre-authentication methods to establish trust in each other's public keys. These public keys could be used to set up one or more secured communication channels, i.e., encrypted and authenticated communication channel(s), between the participants using any one of the numerous 2-party or multi-party key exchange protocols now known or later developed. Those secure communication channel(s) can then be used to exchange any sort of data between the participants in a secure fashion.

In various other systems, exchanging key information over one or more pre-authentication channels can be used to select authenticated participants out of a group of potential participants. The group of potential participants can include one or more participants who already participate in a known credential infrastructure. For instance, members of an existing public key infrastructure could use a location-limited channel to register their individual public key with a device over which they wished to exert control. Later, that device would be able to recognize the holder of the private key corresponding to the public key so registered when the holder sent requests to that device over a network connection.

One exemplary example of such an application is a train station or airport locker earmarked for use by frequent travelers who belong to a frequent traveler organization. Those frequent travelers have been issued with membership credentials, in the form of a digital certificate issued by the frequent traveler organization's public key infrastructure. A user who is a member of that frequent traveler organization walks up to the frequent traveler locker, transmits to and receives back from the locker pre-authentication information using, for example, a personal digital assistant (PDA) or the like, and puts the user's stuff in that locker. The locker then verifies over the network that, not only does that user possess the private key corresponding to the public key that that user has just committed to in that user's pre-authentication information, but that public key has been certified as belonging to a frequent traveler.

The locker remembers the last frequent traveler to "register that user's key" with the locker in this way. Consequently, later on, that user can connect to the locker securely, possibly from a distance, using the pre-authentication information that the locker sent to the user, so that the locker is sure that the locker is communicating with the proper user, to tell the locker, for example, to open.

The "existing credential infrastructure" refers to capture applications such as, for example, applications where a credential-issuing authority gives everyone in a particular group certificates. Any member of that credential infrastructure, but only members of that infrastructure, are allowed access to a particular resource, and only one or a subset of group members may access the resource at one time. Later, one person wants to indicate which individual certificate holders have access to that particular resource, by requiring the various certificate holders to pre-authenticate to a given device, which can be used to implement any number of policies, such as the "last certificate holder to pre-authenticate controls the device" policy described above. As a result, the device would, in various exemplary systems, require that someone wanting to use that device both prove possession of a key certified in an issued certificate, and that that key was one that had pre-authenticated to that device in the appropriate way.

In various systems and methods, the pre-authentication process for an initiating device begins by establishing a location-limited channel over which that device can communicate with a responding device. Next, communication over the location-limited channel is established between the initiating device and the responding device using the location limited channel. Before and/or after communication is established between the responding device and the initiating device, the initiating device and the responding device each generates a commitment for one or more public key. The commitments will be exchanged between the initiating device and the responding device over the location-limited channel. A commitment can be a portion of that public key, that public key itself, an encoding of that public key, a mathematical function of that public key or some other function of that public key that can be generated by any appropriate commitment technique. For example, the prospective member device generates a commitment for that public key or for a secret that the prospective member device will send to the credential issuing device. These commitments, along with any supporting information such as device location, communication information, or other authentication information, are examples of each party's pre-authentication information.

A commitment to a piece of information X is a piece of information C that can be verified to match X. A commitment is binding, when it is cryptographically difficult for an attacker, even knowing X and C, to produce a different piece of information Y that C will also match. A commitment is hiding when it cryptographically difficult for an attacker knowing C to extract even partial information about X. An example of a binding and hiding commitment to X can be H(X) where H is a cryptographically secure hash function. It should be appreciated that one of ordinary skill in the art will be able to determine from the context whether the commitment used needs to be binding, hiding, or both.

A commitment can be used to establish trust if it is received over a preferred channel or endowed with a digital signature from a party that the recipient trusts. A trusted commitment allows the level of trust of a matching piece of information, which could have been received over an untrusted channel and/or unsigned, to be elevated to the same level of trust as the commitment.

Once the commitments are exchanged between the initiating device and the responding device over the location-limited channel, the initiating device and the responding device exchange keys using, for example, any appropriate key-exchange protocol. As a result, the initiating device and the responding device will be able to communicate over a communication path that is distinct from the location-limited channel. The key exchange protocol need not use the location-limited channel or an encrypted data path to exchange public keys. However, if secret keys are being exchanged, secure communications, such as using the committed-to keys to establish secure communications over a non-location-limited network and using the established secure communication channel to negotiate exchange of a secret key, should be used. Furthermore, the location-limited channel can be used with the key exchange protocol. It should be appreciated that, in this case, any secret data should be encrypted, such as, for example, by using a protocol such as SSL. This can be useful where the location-limited channel has sufficient bandwidth to timely carry the protocol.

Once the keys are exchanged, one or both of the initiating device and the responding device verifies that the received key matches the commitment previously received over the location-limited channel. This can be done both by the initiating device and by the responding device with the commitments and keys they have respectively received. For example, verifying that a received key matches a previously-received commitment can be performed by generating a cryptographic hash of the key and verifying that this hash is equal to the commitment. Once the public keys are verified by the commitment information, proof that the device providing the verified public key also has possession of the corresponding private key is established. This can be done, for example, by using a key-pair validation mechanism that uses techniques well known in the art.

In various systems, the actual key can be provided as the commitment. In this situation, when the keys are exchanged, verifying that the received key matches the previously received commitment can be done simply by verifying that the received key and the previously received commitment are equal.

In various systems, pre-authentication for two keys, taking place over a location-limited channel, entails:
1. A→B:addr_{A}, h(PK_{A})
2. B→A:addr_{B}, h(PK_{B})
where:

addr_{A} and addr_{B} represent the addresses in the wireless space of A and B, respectively;

PK_{A} and PK_{B} represent the public key belonging to A and B, respectively; and

h(PK_{A}) and h(PK_{B}) represent commitments to PK_{A} and PK_{B}, respectively, such as, for example, a one-way hash of an encoding of the key.

In various systems, authentication continues over a non-location-limited channel using any appropriate key exchange protocol to exchange PK_{A} and PK_{B} to establish secure communications.

In contrast, in various systems, for one key, pre-authentication taking place over a location-limited channel entails:
1. A→B:addr_{A}, h(PK_{A}); and
2. B→A:addr_{B}, h(S_{B}).
where:

S_{B} represents a secret belonging to B; and

h(S_{B}) is a commitment to the secret S_{B}.

In various systems, authentication continues over a non-location-limited channel using any appropriate key exchange protocol to exchange PK_{A} and the secret. One such authentication technique entails:
1. A→B: PK_{A} ; and
2. B→A: E_{PKA}(S_{B}),
where E_{PKA}(S_{B}) is the encryption of S_{B} under PK_{A}

Once the two devices have pre-authenticated, to each other, these two devices can proceed with trusted communication as appropriate for the application. In various systems, this entails providing the responding device, acting as a prospective member of a credential infrastructure, with a credential for the prospective member device as well as with authentication data provided by the initiator, acting as a credential issuer or its agent, such as, for example, the credential issuing device's public key certificate and any other information that is requested by the prospective member device. When using a public key infrastructure, a public key certificate is used as the credential. In various systems, a credential can include a X.509 certificate, a WTLS certificate, a SPKI certificate, an attribute certificate, and/or any other association of a key or secret with trust, access, and/or identity.

Once provisioned, the prospective member device becomes a member device of the secure credential infrastructure and can use its credential as known in the art. This includes using the credential to enable secure communications across a network, using the credential to provide access to devices, networks, services, containers, office space, and/or the like that requires authentication and/or authorization or a credential to access.

Any device that is usable to perform the above-outlined credentialing and provisioning techniques, as well as any device that performs provisioning services for other secure networks, is contemplated as a credential issuing device. Often, the credential issuing device includes a credential issuing authority. For example, in the context of a public key infrastructure, the credential issuing authority is a certification authority (CA). It should be appreciated that a public key infrastructure is only one instance of a secure credential infrastructure that includes a credential issuing authority, e.g., a certification authority, that provides a credential, such as a public key certificate, through a credential issuing device to the prospective member device. Possession of the credential by the prospective member device makes the device a member device of the secure credential infrastructure. Possession of the credential provides the member device with the ability to authenticate and/or authorize, or to access.

It should be appreciated that the location-limited channel can be any communication pathway that has both a demonstrative identification property and an authenticity property. The demonstrative identification property requires that identification be based on a physical context, such as, for example, "the printer in front of me," "all PDA's in the room," or "this device that I am touching"). The location-limited channel uses communication technologies that have inherent physical limitations on their transmissions. The demonstrative identification property of the location-limited channel means that human operators are in some way aware of which devices are communicating with each other over the location-limited channel and that the human operators can easily detect when an attack is being made on the location-limited channel.

Examples of such technologies include visible or invisible electromagnetic radiation communication such as infrared communications, communications through a short run of wires, audio (both audible, and inaudible (for example ultrasonic)), communication by passing information from one device to another device using a physical computer-readable media (such as a removable media or drive (for example, a floppy disk, a removable disk, a USB storage device (such as a flash memory pen or disk drive) or other tangible data carrier)), physical electrical contact, near-field signaling across the body, and short range RF, as well as embodiments that require an operator to enter a code, and any other known or later-developed communication technology that has an inherent physical limitation on its transmissions.

The authenticity property of the location-limited channel means that it is impossible or difficult for an attacker to transmit over the location-limited channel or tamper with messages sent over the location-limited channel without being detected by the legitimate parties to the communication. The location-limited channel does not require secrecy, so long as the attacker cannot transmit on the location-limited channel without being detected. Accordingly, an attacker can monitor the transmissions on the location-limited channel. Because of the nature of the location-limited channel, it is difficult for an attacker to monitor the location-limited channel, let alone transmit on the location-limited channel without being detected. Furthermore, as discussed in greater detail below, detection only requires that the human participants know the number of the participants (devices) who are communicating over the location-limited channel. Using the location-limited channel to pre-authenticate the participants' keys allows the administrator of the secure credential infrastructure to be assured that the keys are only provided to prospective member devices that have access to the location-limited channel.

During the pre-authentication process, commitments to each participant's public keys are exchanged over the location-limited channel. Once the commitments are exchanged, the devices can perform a key exchange protocol or procedure and establish further secure communication using any appropriate method. For example, once a key is received, the received key is verified by checking that the received key matches the commitment that was provided via the location-limited channel. Once the keys are verified, well-known techniques can be used to commence communication using the keys, and, in addition, in the case of a public key, to verify that the other device holds the private key corresponding to the provided public key. Once the public keys are verified and the provider of the public key proves possession of the private key that corresponds to the public key, the participants can continue with secure and authenticated communications as appropriate for their application.

In contrast to PGP and similar techniques, as outlined above, systems and methods according to this invention use direct authentication of (relatively) immediate communications. In various exemplary embodiments of systems and methods according to this invention, only the originator needs to have one or more public keys. In various exemplary embodiments, all of the other participants need only have a hash function and one or more secrets to hash.

The following detailed discussion focuses on a specific pattern of interaction between the originator and at least one other participant. In particular, this pattern is a circle or chain pattern, where each participant, including the originator, passes a location-limited physical token channel to only one other participant and receives the location-limited physical token channel from only one other participant. However, it should be appreciated that other patterns of interaction between the originator and the other participants could be used, such as sub-chains that each start and end with the originator and pass through a subset of one or more of the plurality of participants. In general, however, no participant should be allowed access to the location-limited physical token channel twice before it is returned to the originator, regardless of the pattern.

It should also be appreciated that, when the location-limited physical token channel is described as being passed between participants, including the originator, that not only encompasses directly handing it from one participant to another, but also any other known or later-developed technique for securely transferring the location-limited physical token from one participant to another, such as, for example, by the U.S. Mail Service, commercial courier services and the like.

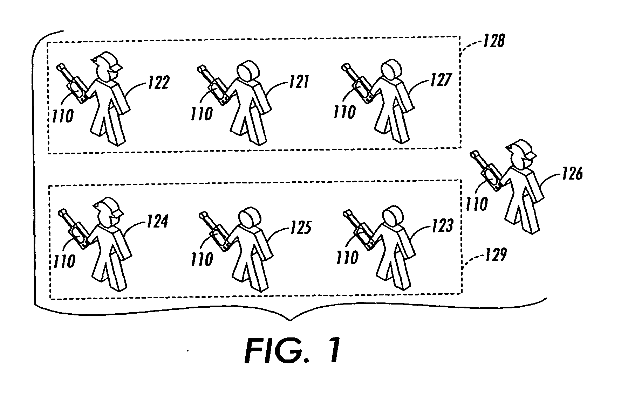

Fig. 1 illustrates an exemplary situation where secure participation by participants in an ad-hoc group needs to be established. Fig. 1 shows a number of individuals 121-127. Each of the individuals 121-127 has a device 110 that is capable of communicating over a wired and/or wireless network with the devices 110 of the other individuals 121-127. For example, each of the devices 110 has a wireless networking card that allows each of the participants 121-127 to connect their individual devices 110 to an available wireless network, such as a private local area network, a public local area network, such as that provided in an "Internet café" and/or directly with another device containing a compatible wireless networking card.

Imagine for the moment that the individuals 121-127 represent a first group 128 of individuals 121, 122 and 127 and a competing second group 129 of individuals 123-125, each of whom is making a presentation to a potential client 126 for which the two groups are competing. Suppose also that, not atypically, each of the first and second groups 128 and 129 are meeting with the client 126 at the client's business offices. Finally, imagine that each of the two groups 128 and 129, prior to making their presentations, would like to be able to communicate information on their individual devices 110 with the other members of their respective groups 128 or 129. However, each of the groups 128 and 129 has confidential information that they are not willing to share either with the other group 129 or 128, respectively, or with the client 126.

Obviously, each of the groups 128 and 129 could connect to the client's local area network. However, this exposes each of the groups' communications between members of the groups 128 and 129 to eavesdropping by either the other group 129 or 128, respectively, and/or the client 126. Similarly, the participants in each group 128 or 129 could attempt to wirelessly communicate with each other. However, this too is subject to eavesdropping by either the participants of the other group 129 or 128, respectively, and/or the client 126. Regardless of how the two groups 128 and 129 wish to communicate within their group 128 or 129, each of the participants within one of the groups 128 and 129 must be able to locate the other participants in that group 128 or 129 and must be able to establish secure connections with each other such that eavesdropping by any other participants, whether it is the client 126 or the members of the other group, is prevented. That is, in order for their communications devices 110 to share information with each other, each of the participants of a particular group 128 or 129 needs to be able to find each other. Assuming the users actually know what the names of their devices are, they can exchange those names with each other. However, this is cumbersome, especially for non-expert users. In addition, if dynamic IP addresses are used, such as on a public network, locating each other's communications devices 110 becomes even more difficult.

Assuming that the participants of a particular group have actually been able to configure their communications devices 110 so that they can communicate with each other, the participants of that group still face the difficulty of making these communications secure. In principle, while public key cryptography and public key infrastructures provide a good solution, the participants of a group will need to arrange some way of exchanging their credentials with each other, such as registering with a third-party certificate authority, such as, for example, Verisign.

While various solutions exist that address these problems for specific scenarios, such conventional solutions tend to collapse when they are applied in ad-hoc settings where the participants of a particular group may be meeting each other for the first time, the participants may not have a firewall present that provides them with a secure space in the network, and/or one or more of the participants does not trust the certification authority signing the certificate of one or more of the other participants. On top of this, any such solution requires that the users all have compatible software and that the users know how to configure such software.

Various exemplary embodiments of the systems and methods according to this invention resolve these location and security issues by using pre-authentication techniques, such as those disclosed in the 699 application, in combination with location-limited physical token channels, to allow users to rapidly and intuitively establish secure communications with each other that do not require any information technology infrastructures, any pre-arranged secret information, and/or any third party participation. Various exemplary embodiments of the systems and methods according to this invention use protocols and methods specifically designed for such location-limited physical token channels that are implemented using inexpensive removable information storage devices to exchange pre-authentication credential information between participants of a group to create secure communications between the participants of the group.

In general, according to this invention, a location-limited physical token channel can be implemented using any removable medium that is generally passive in nature, such as USB flashcards, floppy disks, CD-R disks, CD-RW disks, DVD-R disks, DVD-RW disks, external hard drives or the like. Furthermore, devices such as digital cameras and MP3 players can also be used to implement the location-limited physical token channels according to this invention, as these devices have sufficient storage capacity and are designed to readily interface with other communication devices. It should also be appreciated, unlike the systems disclosed in U.S. Patent application 10/231,194, in various exemplary embodiments of the systems and methods according to this invention, the location-limited physical token channel according to this invention is not responsible for issuing or revoking authentication credentials.

Similarly, the location-limited physical token channel according to this invention need not be intelligent about the information that is placed upon it. Rather, in various exemplary embodiments according to this invention, it is up to the communication devices to which the location-limited physical token channel is connected or interfaced with, i.e., the communications devices that use the location-limited physical token channel, to interpret the information that is stored upon location-limited physical token channel.

It should also be appreciated that it is highly unusual for modem data processing devices, such as desk top computers, laptop computers, portable computers, tablet computers, high-end personal digital assistants, and even low-end personal digital assistants, digital cameras and the like, not to be able to connect with or interface to such location-limited physical token channels.

Thus, the general, large storage capability of these location-limited physical token channels and their widespread compatibility with conventional data processing devices makes such location-limited physical token channels useful for exchanging pre-authentication information and/or location information. For efficient group communications, as outlined above with respect to the exchanges of public keys using floppy disks and the like, techniques for exchanging pre-authentication information should be able to scale well with the size of the group. Moreover, any group member should be able to initiate the exchange process. In accordance with various exemplary embodiments of systems and methods of this invention, to exchange pre-authentication information and/or locations with all of the members of a group, the location-limited physical token channel can be exchanged in a single pass between the members of the group to obtain secure authenticated communications between any two or more members of the group.

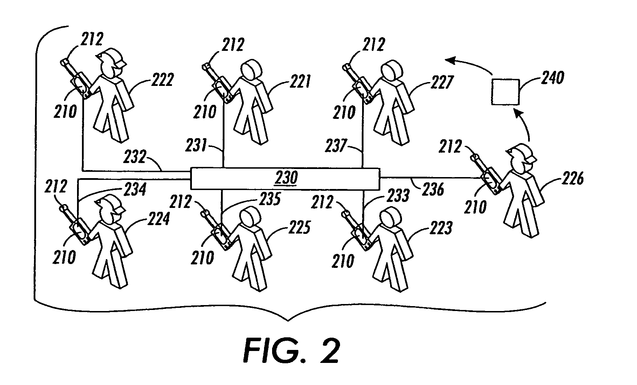

Fig. 2 illustrates a second exemplary group of individuals 221-227. Each of the individuals 221-227 has a communications device, such as a desktop computer, a laptop computer, a portable computer, a tablet computer, a network-enabled personal digital assistant or the like. Each of the communication devices 210 is connected to a network 230 over a wired and/or wireless link 231-237, respectively. Additionally, each of the communication devices 210 includes an interface device or system 212 that allows the storage space of a limited-location physical token channel 140 to be read from and written to. For example, if the location-limited physical token channel 240 is a USB flashcard, the interface structure or systems 212 are USB ports. In contrast, if the location-limited physical token channels are floppy disks or optical disks, the interface structures 212 are floppy disk drives or optical disk drives, respectively. It should be appreciated that optical disk drives include CD-R drives, CD-RW drives, DVD-R drives, DVD-RW drives, or any other known or later-developed optical disk drive system.

To enable the participants 221-227 to securely communicate with each other over the network 230 while preventing any other entities on the network 230 from eavesdropping or otherwise accessing data being communicated between the participants 221-227 of this group, an originator of the group, such as, for example, the participant 221, takes the location-limited physical token channel 240 and inserts or otherwise connects the location-limited physical token channel 240 to his communication device 210 using the interface 212. The originator 221 then stores certain information on the location-limited physical token channel, such as the originator's location on the network 230, the originator's pre-authentication information, as well as additional information, as desired, such as, for example, a secret or the like.

The participant 221 then disconnects the location-limited physical token channel 240 from his communication device 210 and passes it to the participant 222. The participant 222 reads the originator's information from the location-limited physical token channel 240, writes new information on the location-limited physical token channel 240 and then passes the location-limited physical token channel 240 to the participant 223. In turn, each participant 223-227 receives the location-limited physical token channel from the preceding participant, connects the location-limited physical token channel to that participant's communication device, reads the originator's information, adds that participants' information, and passes the location-limited physical token channel onto the next participant.

After the last participant 227 detaches or otherwise removes the location-limited physical token channel from that participant's communication device 210, the last participant 227 then passes the location-limited physical token channel back to the originator 221. The originator 221, using the location and/or pre-authentication credential information added to the location-limited physical token channel 240 by each of the other participants, uses that information to connect to each of the other participants 222-227 using the network 230 to complete establishing the secure communications between the participants 221-227 of this group.

Furthermore, should another participant arrive who needs to be added to the group shown in Fig. 2, the location-limited physical token channel 240 can easily be passed to that new participant. Once that participant has inserted or otherwise connected the location-limited physical token channel 240 to that participant's communication device 210, input the stored originator's information from the location-limited physical token channel 240 and copied that participant's information to the location-limited physical token channel 240, that new participant returns the location-limited physical token channel 240 back to the originator 221, who passes all of the pre-authentication information and/or location information of the other participants of the group to that new participant and passes the pre-authentication credential and/or location information of that new participant to each of the previously authenticated participants 222-227.

Location-limited channels prevent eavesdropping attacks, which are, by definition, passive attacks where an attacker just listens to and/or reads information passing between the participants, primarily because most, if not all, data written to the location-limited channel is already public information, such as, for example, public keys, hashes of public keys, perhaps hashes of secrets or other public information. That is, the location-limited channel's primary resistance to eavesdropping attacks is in the public nature of the data communicated over such location-limited channels. One reason the protocol works is that the participants prove possession of private information corresponding to the public information. As the information written by each participant onto the location-limited physical token channel 240 is public, passive eavesdropping attacks can be easily avoided.

Any participant who merely reads the data on the location-limited physical token channel is still unable to interact with the legitimate participants in the exchange, or to impersonate any of them, as that participant does not possess any of the private keys corresponding to the public keys committed to on the location-limited physical token channel. An attacker is therefore forced to mount an active attack on the location-limited physical token channel itself. Such active attacks, or even passive attacks, are easily thwarted by linking a participant's ability to participate in the group to that participant's ability to physically interact with the information stored on the limited-location physical token channel 240. Particularly when the legitimate participants are all physically located at a single location, it is difficult, if not impossible, for an attacker to surreptitiously participate in the group. An attacker cannot mount any class of attack, passive or active, against members of the group using only the primary communication channel such as the wired or wireless network or any other main channel other than the location-limited physical token channel, as that attacker cannot authenticate itself to any participant, as the attacker is simply not in possession of any of the private keys corresponding to the public keys stored on the location-limited physical token channel.

There are several defenses, beyond mere physical control of the location-limited physical token channel, that allow legitimate participants to discover attempts to mount an active attack against the location-limited physical token channel. First, an attacker may attempt to add the attacker's own pre-authentication data to the set of participants' data stored on the location-limited physical token channel. This can be detected as the count of expected participants will not match the number of data entries stored on the location-limited physical token channel. For example, in the exemplary embodiment shown in Fig. 2, the originator 221 expects to receive the limited location physical token channel 240 from the participant 227 such that the location-limited physical token channel has seven sets of location and/or credential information on it.

If, however, the location-limited physical token channel has more than seven sets of credential and/or location information on it, the originator 221 can readily determine that someone who is not supposed to be in the group has been able to access the location-limited physical token channel. The originator 221 can then verify the particular location and/or pre-authentication credential information of the legitimate participants 222-227 and eliminate the false set of pre-authentication information and/or location information before proceeding. Alternatively, the originator 221 can eliminate all of the pre-authentication information and/or location information from the location-limited physical token channel and repeat the process.

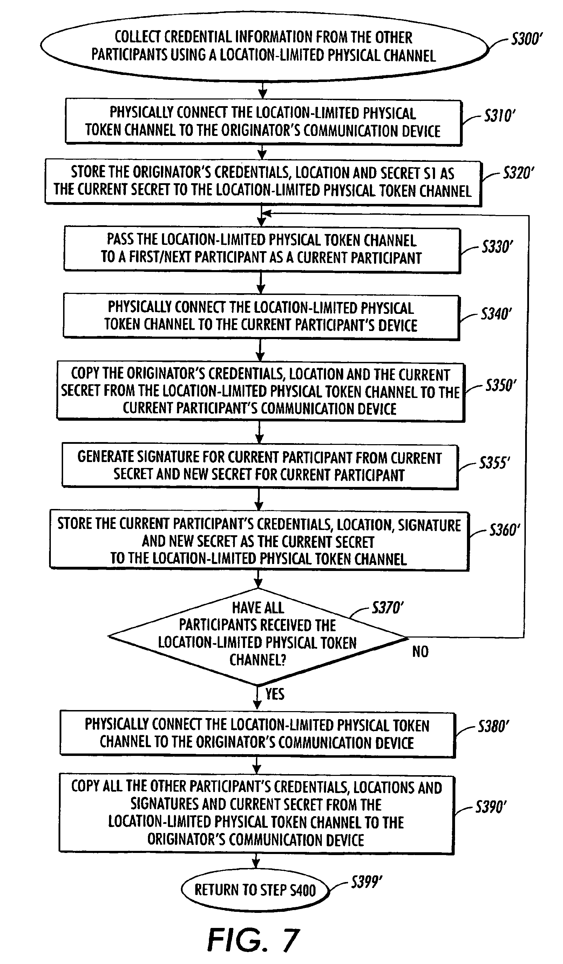

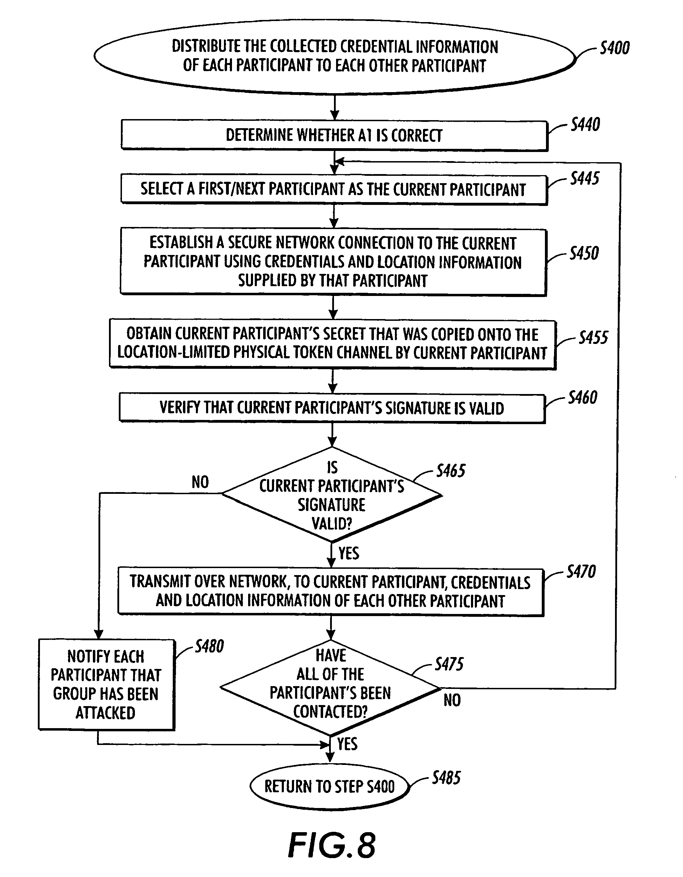

A more sophisticated attacker may try to delete the pre-authentication information of a prior participant in order to add his own without altering the count. A simple protocol that can be used to prevent any single attacker, or participant, from altering the pre-authentication information written by any other participant is described below with respect to Figs. 7 and 8. The resulting protocol is immune to any attack that does not involve collusion by two or more participants to subvert the information on the token, or the ability of an attacker to obtain and modify the data on the token twice, i.e., both before and after the data that the attacker wishes to modify has been written.

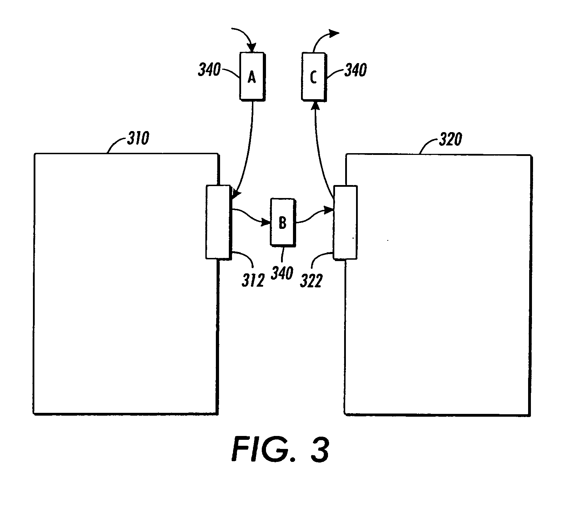

Fig. 3 shows in greater detail one exemplary embodiment of two of the communication devices 310 and 320 of two of the participants 221-227. As shown in Fig. 3, the first communication device 310 includes an interface structure 312 to which a location-limited physical token channel 340 can be connected. Similarly, the second communication device 320 includes an interface structure 322 to which the location-limited physical token channel 340 can be connected. In operation, the participant owner of the first communication device 310 receives the location-limited physical token channel 340 containing a set of information A from a preceding participant, such as the originator. The set of information A includes at least one or more of the originator's pre-authentication information, the originator's location, a current secret, one or more signatures or the like. The set of information A may also include any other preceding participants' pre-authentication information, network location and the like. The owner of the communication device 310, having received the location-limited physical token channel 340 from the preceding participant, connects the location-limited physical token channel 340 to the interface structure 312.

Assuming the communication device 310 already has all the necessary software structures installed on it to allow it to access and interact with the pre-authentication credential information, location information and/or the like stored on the location-limited physical token channel 340, the communication device 310 then reads the credential information, location information and/or the like of the originator 221 from the location-limited physical token channel 340 and stores the read information in a memory located within the communicate device 310. The communication device 310 then adds the pre-authentication credential information, location information and/or the like for that communication device 310 to the set of information A stored on the location-limited physical token channel 340, converting the set of information A into a new set of information B.

The owner of the communication device 310 then disconnects the location-limited physical token channel 340 containing the set of information B from the interface structure 312 and passes it onto the next participant-owner of the second communication device 320. The owner of this second communication device 320 then connects the location-limited physical token channel 340 containing the set of information B to the interface structure 322. However, in this case, the communication device 320 does not contain the software structures usable to allow the pre-authentication credential information, the location information and/or the like of the set of information B stored on the location-limited physical token channel 340 from being read into and properly stored in the communication device 320, to allow the pre-authentication credential information, location information and/or the like of the communication device 320 from being properly added to and stored in the location-limited physical token channel 340, or to allow the necessary communications with the originator 221 to establish secure communication with this user communication device 320. Accordingly, installation software structures that are also stored on the location-limited physical token channel 340 automatically execute to install the necessary software structures for these operations on the communication devices 320.

The communication device 320, now that the appropriate software structures have been installed on this communication device 320, reads the pre-authentication credential, location information and/or the like of the originator 221 and any other preceding participant from the set of information B and stores the read information appropriately in a memory located in the communication device 320. The communication device 320 then adds the pre-authentication credential, location information and/or the like for the owner of the communication device 320 to the information stored in the location-limited physical token channel 340, converting the set of stored information B into a new set of stored information C. The owner of the communication device 320 then disconnects the location-limited physical token channel 340 from the interface 322 and passes it on to the next participant, if there is one, or back to the originator 221 if the participant/owner of the communication device 320 is the last such participant in the group being established.

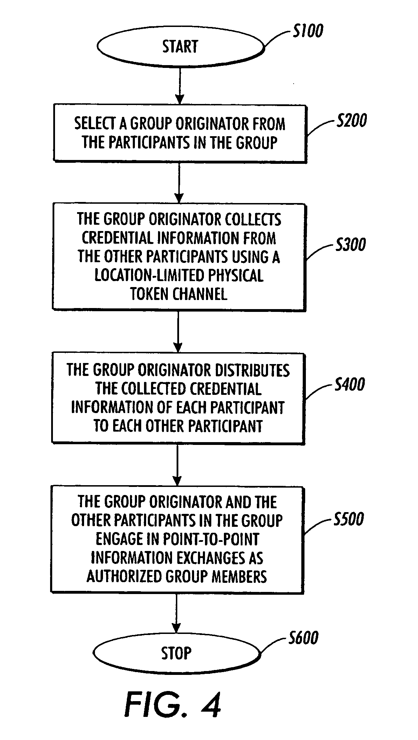

Fig. 4 is a flowchart outlining one exemplary embodiment of a method of authenticating communication between participants of a group using a location-limited physical token channel according to this invention. As shown in Fig. 4, beginning in step S 100, operation continues to step S200, where a group originator is selected from the participants in the group. Then, in step S300, using a location-limited physical token channel, the group originator collects pre-authentication credential information, location information, secret information and/or signature information from the other participants in the group. Next, in step S400, the group originator distributes the collected pre-authentication credential information, as well as any other information collected from each participant, to each other participant to enable point-to-point secure communications between the participants of the group. Then, in step S500, the group originator and the other participants in the group are able to engage in point-to-point secure information exchanges as authorized group members. Operation of the method then continues to step S600, where the method stops.

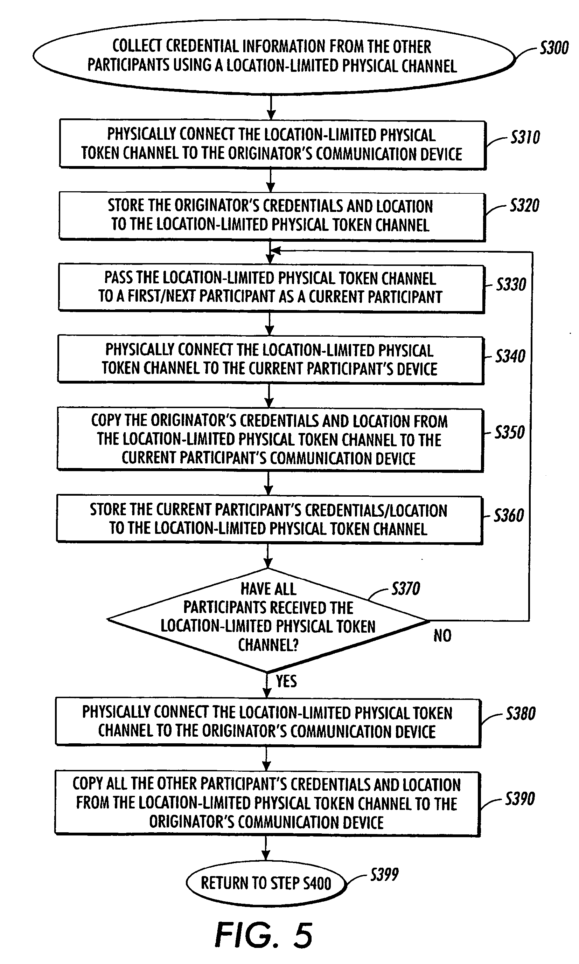

Fig. 5 is a flowchart outlining in greater detail a first exemplary embodiment of the method for collecting pre-authentication information and other desired information from the participants in the group using the location-limited physical token channel according to this invention. As shown in Fig. 5, beginning in step S300, operation continues to step S310, where the location-limited physical token channel is physically connected to the group originators' communication device. Then, in step S320, the originator's pre-authentication information and the originator's location on the communication network is stored to the location-limited physical token channel. Next, in step S330, the location-limited physical token channel is passed to a first or a next participant, who becomes the current participant. Operation then continues to step S340.

In step S340, the current participant physically connects the location-limited physical token channel to that current participant's communication device. Next, in step S350, the originator's pre-authentication information, as discussed above, and location on the communication network are copied from the location-limited physical token channel to the current participant's communication device. Then, in step S360, the current participant's pre-authentication information, location on the communication network, secret information and/or signature information are stored to the location-limited physical token channel. Operation then continues to step S370.

In step S370, a determination is made whether all participants have received the location-limited physical token channel. If not, operation returns to step S330, where the location-limited physical token channel is passed to the next participant as the current participant. Steps S340-370 are then repeated until all participants have received the location-limited physical token channel. Once all of the participants have received the location-limited physical token channel, operation continues to step S380, where the originator physically connects the location-limited physical token channel to the originator's communication device. Then, in step S390, all of the other participants' pre-authentication information, locations on the communication network, secret information and/or signature information are copied from the location-limited physical token channel to the originator's communication device. Next, in step S399, operation of the method returns to step S400.

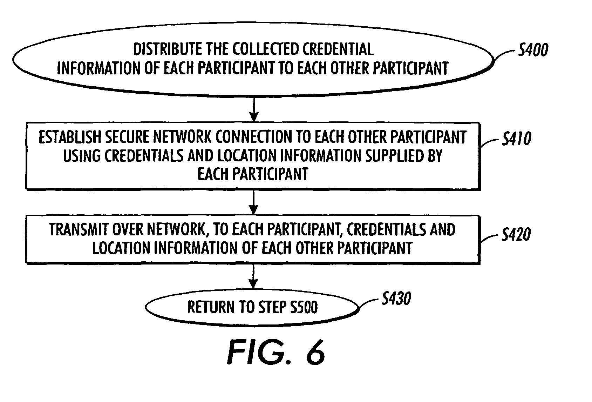

Fig. 6 is a flowchart outlining in greater detail a first exemplary embodiment of the method for distributing the collected pre-authentication information contained within the location-limited physical token channel to the other participants of the group according to this invention. As shown in Fig. 6, beginning in step S400, operation continues to step S410, where a secure network connection is established from the originator's communication device to the communication device of each other group participant using the pre-authentication information, location information, secret information and/or signature information supplied by each of the other group of participants. Then, in step S420, the pre-authentication information, location information, secret information and/or signature information of each other participant are transmitted over the established secure network connections to each participant in the group. Next, in step S430, operation of the method returns to step S500.

It should be appreciated that, in the method described above with respect to Figs. 5 and 6, the specific authentication mechanisms and protocols that are used with the location-limited physical token channel described above can include public key certificates, individual public keys, any other known or later-developed public-key-based group key agreement or key exchange mechanism and/or any other known or later-developed appropriate authentication mechanism. These authentication mechanisms can be used with the process outlined above with respect to Figs. 4-6. It should be appreciated that those public keys can be in certificates, on their own, or could be other kinds of public values used for group key exchanges, rather than pair-wise exchanges. It should also be appreciated that, in various exemplary embodiments, group key exchanges between all group members could be used in place of the pair-wise exchanges between the originator and the other participants described with respect to step S400.

However, it should be appreciated that the process outlined above with respect to claims 4-6 can be attacked by malicious participants. A possible attack using the basic protocol outlined above with respect to Figs. 4-6 can occur if a malicious participant alters the pre-authentication information that were stored onto the location-limited physical token channel by preceding participants. Although such a single malicious participant would not be able to alter the pre-authentication information of the originator without being detected, such a single malicious participant could alter the pre-authentication information of the other participants on the device, thus denying them entry into the group.

Figs. 7 and 8 outline a second exemplary process that can be used to protect against such a single adversary attack. In general, this second example uses a series of chained secrets to ensure that all of the participants of the group who are given physical possession of the location-limited physical token channel actually become members of the group.

Fig. 7 is a flowchart outlining in greater detail a second example of the method for collecting pre-authentication information using a location-limited physical token channel that is protected against single adversary attacks. As shown in Fig. 7, operation of the method begins in step S300 and continues to step S310', where the group originator, as the current participant, physically connects the location-limited physical token channel to the group originator's communication device. Then, in step S320', the group originator stores the group originator's pre-authentication information, network location, and a secret S₀ as a current secret onto the location-limited physical token channel. The originator must also remember the secret S₀ for later verification. The originator may also store authentication information, such as a digital signature made with the originator's private key over the other information the originator has written to the location-limited physical token channel, to the location-limited physical token channel. The originator may also store a cryptographic hash of all that data along with a second secret value, to the location-limited physical token channel. However, the originator does not write that second secret value to the location-limited physical token channel.

It should be appreciated that, if the originator wants to use a hash for authentication, there has to be something included in the hashed data that an attacker does not know, so that the attacker cannot replicate it. Another option would be to hash just the data onto the location-limited physical token channel, but to write out to the location-limited physical token channel a keyed hash or a message authentication code(MAC), where the second secret would be the key, which would be stored by the originator. This is necessary so that no one else can change the data and make the hash and/or the message authentication code acceptable to the originator. Rather, only the originator will be able to verify such a hash. To save space, the second secret could be determined from the first. For example, the originator stores S0, uses the hash function H(S0) to create a message authentication code from the data, and writes a hash H(H(S0)) to the location limited physical token channel.

If the originator uses a signature, the originator does not have to include the second secret, as determining the signature requires possession of the originator's private key. Again, the other participants will have no way to verify the signature unless the originator includes the originator's whole public key on the location limited physical token channel or the other participants have it already from some other route and the other participants have some way to authenticate that this is the correct originator key. This could be the case in applications where the originator is well known, or the other participants have worked with the originator before. The originator will later verify this authentication information when the location-limited physical token channel is returned to the originator. This additional authentication information, if provided, is referred to as an authentication value A₀. Next, in step S330', the location-limited physical token channel is passed by the current participant to a first or next participant as the current participant. Operation then continues to step S340'.

In step S340', the current participant (participant n) physically connects the location-limited physical token channel to the current participant's communication device. Next, in step S350', the originator's pre-authentication information, and network location, as well as that of all preceding participants, and the current secret S₍ₙ₋₁₎, i.e., the secret from the previous participant (participant n-1), are copied from the location-limited physical token channel to the current participant's communication device.

Thus, when the first participant after the originator receives the location-limited physical token channel, it contains only the originator's pre-authentication information (including the originator's authentication value A₀, if provided), the originator's network location, and the originator's secret (S₀). The n^{th} participant after the originator, upon receiving the location-limited physical token channel, copies the pre-authentication information (including any authentication values) and network location of each of the (n-1) previous participants (including the originator), as well as the preceding participant's (participant n-1) secret S₍ₙ₋₁₎.

The current secret (Sₙ₋₁) is removed or deleted from the location-limited physical token, and is stored by the current participant (participant n) in the current participant's communication device. The current participant then generates a new secret value (Sₙ), which is stored in the current participant's communication device in association with the pre-authentication information the current participant has copied from the location-limited physical token channel. Then, in step S355', the current participant's communication device generates an authentication value, Aₙ, from one or more of the previous participant's secret S₍ₙ₋₁₎ that the current participant removed from the location-limited physical token channel, the current participant's own public key, K, and optionally the current participant's new secret, Sₙ. This authentication value Aₙ can be a digital signature made with the current participant's private key over both secrets. More commonly, this authentication value is a cryptographic digest H(S₍ₙ₋₁₎ ∥ K ∥ Sₙ), where H is a cryptographic digest function such as SHA-1, and '∥' is concatenation. It should be appreciated that, for added security, both of these types of authentication value could be determined over at least some of the previous authentication information that is stored on the location-limited physical token channel, as well as the secrets and the key of the current participant. Operation then continues to step S360'.

In step S360', the current participant (participant n) stores the current participant's pre-authentication information, network location, generated authentication value Aₙ and the new secret Sₙ as the current secret onto the location-limited physical token channel. Then, in step S370', a determination is made whether all participants have received the location-limited physical token channel. If not, operation returns to step S330', for the location-limited physical token channel to be passed to the next participant as the current participant. Steps S340'-370' are then repeated until all of the participants have received the location-limited physical token channel. Of course, it should be understood that, during each iteration of steps S340'-S370', the preceding participant (n-1) was the current participant in the previous iteration. Operation then continues to step S380'.

In step S380', the originator physically connects the location-limited physical token channel to the group originator's communication device. Then, in step S390', the group originator copies all of the other participants' pre-authentication information, locations, and authentication values A₁-Aₙ, and the current secret Sₙ, from the location-limited physical token channel to the originator's communication device. Operation then continues to step S399' where operation returns to step S400.

Fig. 8 is a flowchart outlining in greater detail a second exemplary embodiment of the method for distributing the collected pre-authentication information contained within the location-limited physical token channel to the other participants of the group according to this invention, such that a single adversary attack is defeated.

As shown in Fig. 8, beginning in step S400, operation continues to step S440, where a determination is made whether Ao is correct. That is, if the originator wrote the originator's own authentication value Ao onto the location-limited physical token channel, the originator takes the originator's remembered secret S₀ and confirms that A₀ is indeed the hash, the message authentication code or the signature of the data the originator wrote to the location-limited physical token channel, which should still be on the location-limited physical token channel and the originator's remembered secret S₀, which should no longer be on the location-limited physical token channel, and in the case of a hash or message authentication code, contains or is keyed by the second secret which was remembered by the originator.

Then, in step S445, a first or next participant is selected, in general, in the same order as the location-limited physical token was passed around, by the group originator as the current participant. That is, after the group originator gets back the location-limited physical token channel, the originator generally authenticates each participant in the chain in the order in which each participant received the location-limited physical token channel. If each authentication value A₁-Aₙ contains both the previous participant's secret (S₀-Sₙ₋₁) and the current participant's secret (Sₙ), the originator can go around the group in either sequential or reverse order (or both and meet in the middle).

In any case, the originator will not be sure that an n^{th} participant is authenticated until the originator authenticates the (n-1)^{th} participant. As a consequence, the originator usually goes around the group in the order that the location-limited physical token channel went around the group. Moreover, if the authentication value Aₙ contains only the (n-1)^{th} participant's secret, the originator must go forwards around the group, where backwards and forwards are defined by the original order of group traversal. Next, in step S450, a secure network connection is established by the group originator to the current participant, i.e., the n^{th} participant, using the pre-authentication information and location information stored by that participant onto the location-limited physical token channel. Operation then continues to step S455.

In step S455, the group originator obtains, from the current participant, the current participant's secret Sₙ that was copied onto the location-limited physical token channel by the current participant. Next, in step S460, the group originator verifies that the current participant's authentication value Aₙ is valid based on the current participant's pre-authentication information and at least the secret S₍ₙ₋₁₎ that was supplied by the immediately preceding participant, i.e., the (n-1)^{th} participant. If the authentication values A were to be created as the SHA-1 digest of, for example, the previous participant's secret S₍ₙ₋₁₎, the current participant's public key, and, optionally, the current participant's secret Sₙ, then the originator should be able to generate an authentication value Aₙ from these parameters that is identical to the authentication value Aₙ stored on the location-limited physical token channel. Alternatively, if the authentication value is a digital signature, the originator should be able to verify the signed information, such as, for example, the previous and current secrets S₍ₙ₋₁₎ and Sₙ, and, optionally, on all the authentication information on the token, using that participant's public key as a digital signature. Then, in step S465, a determination is made whether the current participant's authentication value Aₙ is valid. If not, it means that the location-limited physical token channel has been subjected to a single adversary attack such that the secure communications would deny access to the group to one of the legitimate group participants. In this case, operation jumps to step S480. Otherwise, operation continues to step S470.

In step S470, the group originator transmits to the current participant, over the secure communication network, the pre-authentication information and location information of each other participant. Then, in step S475, a determination is made whether all of the participants have been contacted. If not, operation returns to step S445, where the next participant is selected as the current participant, and steps S445-475 are repeated until either the determination in step S465 is "no" or all of the participants have been contacted. Once all of the participants have been contacted, operation jumps from step S475 to step S485. In contrast, in step S480, because the attempt to establish secure communications between the group of participants have been subject to a single adversary attack, each participant is notified that the group has been attacked. Operation then continues to step S485, where operation of the method returns to step S500.

It should be appreciated that, in various examples, step S480 can be omitted, such that operation jumps directly from step S465 to step S485. It should also be appreciated that, in various other examples, in addition to step S480, or possibly in place of step S480, the group originator can take remedial actions to either attempt to repair the information stored on the location-limited physical token channel while attempting to exclude the single adversary, or the originator can simply discard all of the information on the location-limited physical token channel and begin step S300, as outlined in Fig. 7, again. In various other examples, in place of step S480 as shown in Fig. 8, the group originator, in turn, gives the location-limited physical token channel to, and receives the location-limited physical token channel directly back from, each group member. This effectively executes n pair-wise key agreements. Operation then again continues to step S485.

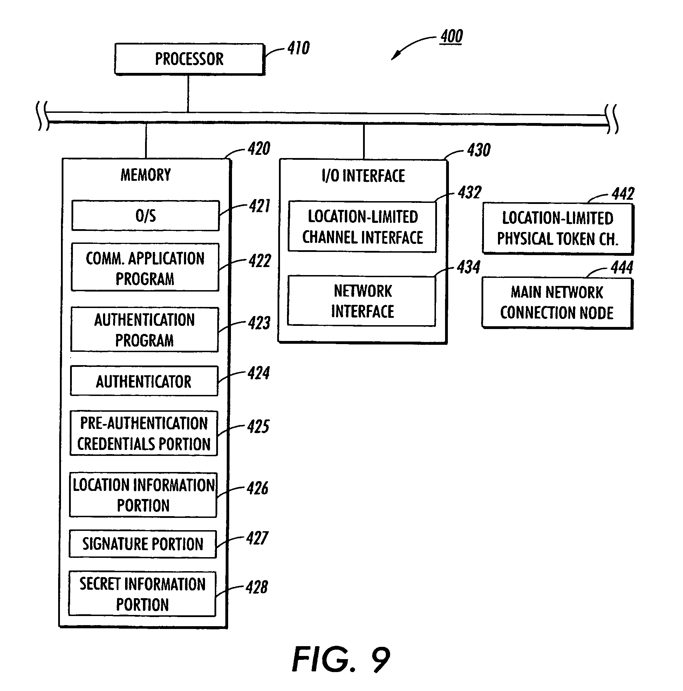

Fig. 9 illustrates one example of a communication device 400 that can be used to set up secure communications in a network medium that is usable as either of the first or second devices 310 or 320. The communication device 400 may be a personal computer, a laptop computer, a personal digital assistant (PDA), a portable computer, a tablet computer, a hand-held computer, a Blackberry™ device, or any other known or later-developed communications device. As shown in Fig. 9, in various examples, the communication device 400 includes a processor 410, a memory 420, and an input/output (I/O) interface 430, which includes a location-limited physical token channel interface 432 and a main communications interface 434. The processor 410 may be a microprocessor, a microcontroller, a digital signal processor (DSP), an arithmetic logic unit (ALU), an application specific integrated circuit (ASIC) and the like. The memory 420 may include volatile memory and/or non-volatile memory, including one or more of random access memory (RAM), read only memory (ROM), Flash memory, a soft or a hard disk drive, an optical disk drive and/or the like.

The memory 420 stores an operating system 421, a communication application 422, an authentication application 423, an authenticator 424, a pre-authentication portion 425, a location information portion 426, a signature information portion 427 and a secrets information portion 428. The operating system 421 may be a customized basic I/O system, any known or later-developed commercially available operating system or the like. The operating system 421 provides the computer instructions which, when executed by the processor 410, programs and controls various I/O controllers including the I/O interface 430 of the communication device 400. The operating system 421 also provides the instructions that store the communication application 422, the authentication application 423 and the authenticator 424 in a retrievable manner.

The communication application 422 provides instructions which, when executed by the processor 410, allows the communication device 400 to communicate with a network node 444 through the main communication interface 434 of the I/O interface 430, which may utilize any known or later-developed network communication mechanism, such as Bluetooth™, IEEE 802.11 wireless networking, or wired Ethernet. The communication application 422 may be an internet browser, an e-mail application, or any other known or later-developed application making use of networked communication.

The pre-authentication portion 425 stores the pre-authentication information of this participant, as well as the pre-authentication information of the other participants received either via the location-limited physical token channel or from the originator. The location information portion 426 likewise stores the location information for this participant, as well as the location information for the other participants received either via the location-limited physical token channel or from the originator. The signature information portion 427 is used by the originator and stores the signatures received from the other participants via the location-limited physical token channel. The secrets information portion 428 stores the secret that this participant supplied to the location-limited physical token channel, and, for the originator, the secrets received from the other participants via the location-limited physical token channel.

The main communication interface 434 can be implemented using any known or later-developed communication circuit or structure. For example, a wireless receiver/transmitter and interface used in a wireless network can be used as the main communication interface 434. In an alternative system, the communication device 400 has a main wired link interface and a main wired link receiver/transmitter, such as TCP/IP interface and socket or both the main wireless link interface and transmitter, and main wired interface and receiver/transmitter. In various exemplary systems, the location-limited physical token channel interface 432 is separate from the main interface 434.

The authentication application 422 provides instructions which, when executed by the processor 410, allows the communication device 400 to establish secure communications with a second communication device 400 of a second participant of the group based on the pre-authentication data, the location information data, the signature information data and/or the secrets information data for this communication device 400 and for the second communication device 400, copied from the location-limited physical token channel, that is stored in the pre-authentication portion 425, the location information portion 426, the signature information portion 427 and/or the secrets information portion 428, respectively. As indicated above, this information has been securely exchanged between this communication device 400 and the second communication device 400 using the location-limited physical token channel.

The pre-authentication information is used to authenticate the received authenticator 424. The pre-authentication data is used to authenticate a public key (or secret) belonging to another participant, by making sure that a) the other participant's public key matches the hash in the pre-authentication data, and that b) the other participant has proved possession of the corresponding private key; or in the one-key case, the originator proves possession of the private key corresponding to the public key the originator committed to on the location-limited physical token channel, and the other participants send in the secrets that are the pre-images of the hashes the other participants used as the pre-authentication data, encrypted under a secure tunnel (e.g. SSL) made using the originator's public key . The authenticator 424 may be a key, a secret, or the like. The key may be either a long-lived key or an ephemeral key. An ephemeral key is created afresh for each new session or during a session. The choice is usually based on the application in which the key is being used. In either case, the key does not require certification by a trusted authority. However, if the key exchange protocol chosen requires an exchange of certificates, the certificate may be self-signed by the communication device 400.

It should be understood that various examples of the communication device 400 can be implemented as software stored on a computer readable medium that is executable on a programmed general purpose computer, a special purpose computer, a microprocessor or the like. Such a computer readable medium includes using a carrier wave or the like to provide the software instructions to a processing device. It should also be understood that each of the circuits, routines, applications, objects, procedures or managers shown in Fig. 9 can be implemented as portions of a suitably programmed general-purpose computer. Alternatively, each of the circuits, routines, applications, objects, procedures or managers shown in Fig. 9 can be implemented as physically distinct hardware circuits within an ASIC, using a digital signal processor (DSP), using a FPGA, a PLD, a PLA and/or a PAL, or using discrete logic elements or discrete circuit elements. The particular form of the circuits, routines, applications, objects, procedures or managers shown in Fig. 9 will take is a design choice and will be obvious and predictable to those skilled in the art. It should be appreciated that the circuits, routines, applications, objects, procedures or managers shown in Fig. 9 do not need to be of the same design.

It should be appreciated that a procedure can be a self-consistent sequence of computerized steps that lead to a desired result. These steps can be defined by and/or in one or more computer instructions stored in a computer readable medium, which should be understood to encompass using a carrier wave or the like to provide the software instructions to a processing device. These steps can be performed by a computer executing the instructions that define the steps. Thus, the term "procedure" can refer to, for example, a sequence of instructions, a sequence of instructions organized within a programmed-procedure or programmed-function, and/or a sequence of instructions organized within programmed-processes executing in one or more computers. Such a procedure can also be implemented directly in circuitry that performs the procedure. Further, computer-controlled methods can be performed by a computer executing one or more appropriate programs, by special purpose hardware designed to perform the method, or any combination of such hardware, firmware and software elements.

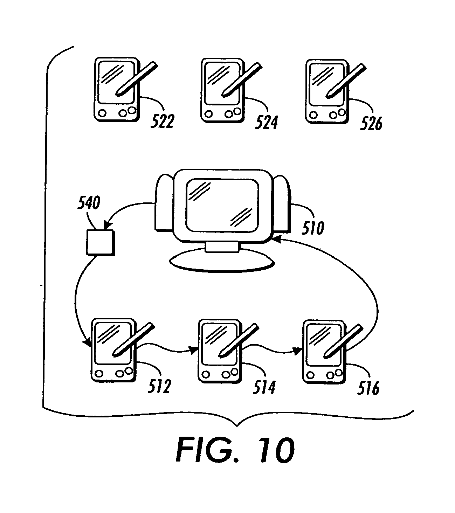

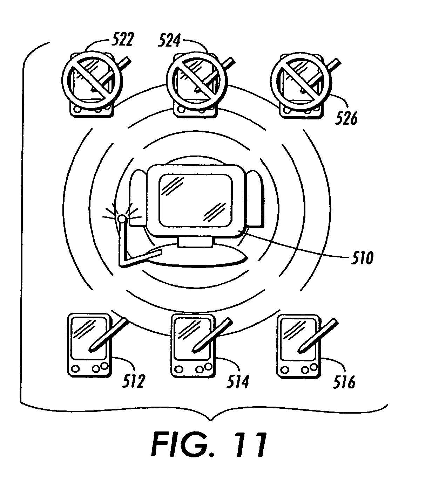

Figs. 10 and 11 illustrate an exemplary setting for authenticating a communication over a network medium among a group of wireless devices according to this invention. As shown in Fig. 10, one participant acts as the group originator 510. In various embodiments, the first participant to copy pre-authentication information and/or location information onto the location-limited physical token channel 540 becomes the group originator 510. The group originator 510 then passes the location-limited physical token channel 540 to a first one of various legitimate participants 512, 514 and 516.

After each legitimate participant 512, 514 or 516 is given possession of the location-limited physical token channel, that participant 512, 514 or 516 connects the location-limited physical token channel to that participant's communication device. That participant 512, 514 or 516 copies the originator's, and possibly each preceding participant's, pre-authentication credential information and location information from the location-limited physical token channel 540 and copies that participant's pre-authentication credential information and network location onto the location-limited physical token channel 540. The location-limited physical token channel is then passed to each of the other participants 512, 514 or 516 in turn until all of the participants 512, 514 and 516 have had an opportunity to copy the originator's, and possibly each preceding participant's, pre-authentication credential information and network location onto their communication device, and to copy onto the location-limited physical token channel 540 their pre-authentication credential information and network location.

The location-limited physical token channel 540 is then returned back to the originator 510, who then establishes secure communications with each of the communication devices of the participants 512, 514 and 516 using the pre-authentication credential information and network location information contained on the location-limited physical token channel 540.

As shown in Fig. 10, other parties 522, 524 and 526 are present and have access to the wireless network. In one embodiment, any attempt to obtain possession of the location-limited physical token channel results in the detection of the attempt. Furthermore, even if an adversary is able to obtain physical possession of the location-limited physical token channel without the attempt to being detected, the group originator is still able to compare the number of such transmissions with the number of expected transmissions, i.e., the number of legitimate participants. If those numbers do not match, the communication may be terminated. If an attacker attempts to delete previous transmissions in order to add the attacker's own value without altering the count, that will be detected as the attacker does not know the authentication secrets Si written by the previous participants that were used by each participant to authenticate each participant's own values and then were deleted from the location-limited physical token channel.

As shown in Fig. 11, each participant 512, 514 and 516 in turn makes a point-to-point connection to the group originator 510, for example, using the address provided by the group originator 510, or the group originator 510 connects to them. Each participant 512, 514, and 516 engages with the group originator 510 in a point-to-point key exchange protocol, such as, for example Socket Layer/ Transport Layer Security (SSL/TLS). Each party confirms that the public key presented by the other party was one committed to by the other on the location-limited physical token channel. The SSL/TLS protocol itself demonstrates as part of its operation that each of those parties has possession of the private key corresponding to the public key that they present.

Through the point-to-point exchange protocol, the group originator 510 arranges for further secure communication between members of the group. For instance, in various exemplary embodiments, the group originator gives each of the participants 512, 514, and 516 a copy of a shared group encryption key or keys. These keys are used to encrypt and authenticate further communication between all the participants, including the group originator 510 and the other participants 512, 514 and 516. It should be appreciated that other embodiments are possible. For example, the group originator could broadcast a list of all authenticated group members public keys to all other group members. The group members could then undertake secure point-to-point communications with each other. Alternatively, the group members could then undertake a group key exchange protocol, as described in the art, to communally derive one or more shared communication keys. In various exemplary embodiments, the group originator could, as part of the point-to-point exchange with each party, issue that party a credential that that party could use to authenticate their future interactions with the other group members.

Because the parties 522, 524 and 526 were not able to gain physical possession of the location-limited physical token channel, the group originator 510 does not recognize the parties 522, 524 and 526 as legitimate participants in the group communication. The parties 522, 524 and 526, therefore, will not be able to successfully create point-to-point connections on the main wireless link with the group originator 510. This results in the parties 522, 524 and 526 not being able to participate in further authenticated communication between the legitimate participants including the group originator 510 and all the other participants 512, 514, and 516, because those parties 522, 524 and 526 will not receive the shared group key, group credentials, or be included on the list of authenticated participants, or be otherwise involved in whatever cryptographic mechanism is use by the group originator to associate group members with each other..

In a centrally-managed group, managing the joining and leaving of participants may be relatively easy. In various exemplary embodiments, as discussed above, a joining participant uses the location-limited physical token channel to pre-authenticate itself to the group originator 510, and receives the group key over a secured wireless link from the group originator 510. When a participant leaves a group, the group originator 510 can distribute a new group key to all remaining participants over the wireless link. This may be done because the group originator 510 has established shared secret keys with each individual participant of the group during the point-to-point key exchange.

While the above-outlined exemplary embodiments have focused on establishing secure communications between at least two communication devices, it should be appreciated that various exemplary embodiments of the systems, methods and location-limited physical token channel according to this invention can be used more broadly to securely exchange information between at least two devices. For example, the systems, methods and location-limited physical token channel according to this invention can be used to provision a second device with a digital certificate as part of a public key infrastructure, or a credential for any other type of authentication mechanism and/or supporting or application data necessary to perform a particular application. For instance, a compact flash or other storage card could be used to exchange pre-authentication data between a provisioning workstation and a PDA capable of operating as a cellular phone. The cellular phone infrastructure could then connect to the PDA, authenticating it using the pre-authentication data collected by the (trusted) workstation, and could provision that PDA with the credentials necessary for that PDA to act as a cellular phone, such as, for example, authenticating that PDA to roaming providers, and basic communication information such as a phone number.

In the following, further preferred embodiments of the method and storage medium, according to the invention are described.

According to a preferred embodiment of the method, storing at least pre-authentication information of the first device to the location-limited physical token channel comprises additionally storing network location information for the first device to the location-limited physical token channel.

According to a further preferred embodiment of the method, copying at least the pre-authentication information of the first device from the location-limited physical token channel to the current device comprises additionally copying network location information for the first device from the location-limited physical token channel to the current device.

According to a further preferred embodiment of the method, storing at least pre-authentication information of the current device to the location-limited physical token channel comprises additionally storing network location information for the current device to the location-limited physical token channel.

According to a further preferred embodiment of the method, establishing, establishing for each other device of the at least two devices, secure communications between the first device and that device based on at least the pre-authentication information of the first device and that device exchanged between the first device and that device using the location-limited physical token channel comprises, for each other device:
contacting that device using the network location information for that device stored on the location-limited physical token channel that is identified as being associated with that device;
confirming whether that device contains requisite authentication information that matches the pre-authentication information stored on the location-limited physical token channel that is identified as being associated with that device; and
confirming whether the first device contains requisite authentication information that matches the pre-authentication, copied by that device from the location-limited physical token channel, that is identified as being associated with the first device.

According to a further preferred embodiment of the method, confirming whether the first device contains requisite authentication information that matches the pre-authentication information, copied by that device from the location limited physical token channel, that is identified as being associated with the first device comprises confirming that the first device contains at least one of a private key or a secret corresponding to the pre-authentication information associated with the first device.

According to a further preferred embodiment of the method, confirming whether that device contains requisite authentication information that matches the pre-authentication information stored on the location-limited physical token channel that is identified as being associated with that device comprises confirming that that device contains at least one of a private key or a secret corresponding to the pre-authentication information associated with that device.

According to a further preferred embodiment of the method, storing at least pre-authentication information of the current device to the location-limited physical token channel comprises additionally storing network location information for the current device to the location-limited physical token channel.

According to a further preferred embodiment of the method, establishing for each other device of the at least two devices, secure communications between the first device and that device based on at least the pre-authentication information of the first device and that device exchanged between the first device and that device using the location-limited physical token channel comprises, for each other device:
confirming whether that device contains requisite authentication information that matches the pre-authentication information stored on the location-limited physical token channel that is identified as being associated with that device; and
confirming whether the first device contains requisite authentication information that matches the pre-authentication, copied by that device from the location-limited physical token channel, that is identified as being associated with the first device.

According to a further preferred embodiment of the method, confirming whether the first device contains requisite authentication information that matches the pre-authentication information, copied by that device from the location limited physical token channel, that is identified as being associated with the first device comprises confirming that the first device contains at least one of a private key or a secret corresponding to the pre-authentication information associated with the first device.

According to a further preferred embodiment of the method, confirming whether that device contains requisite authentication information that matches the pre-authentication information stored on the location-limited physical token channel that is identified as being associated with that device comprises confirming that that device contains at least one of a private key or a secret corresponding to the pre-authentication information associated with that device.

According to a further preferred embodiment of the method, storing at least pre-authentication information of the first device to the location-limited physical token channel comprises additionally storing at least one secret, stored on the first device, to the location-limited physical token channel.

According to a further preferred embodiment of the method, copying at least the pre-authentication information of the first device from the location-limited physical token channel to the current device comprises additionally copying the at least one secret that is stored on the location-limited physical token channel from the location-limited physical token channel to the current device.

According to a further example of the method, further comprising deleting the at least one secret that is stored on the location-limited physical token channel from the location-limited physical token channel and replacing the deleted at least one secret with at least one secret stored on the current device.

According to a further example of the method, establishing, for each other device of the at least two devices, secure communications between the first device and that device based on at least the pre-authentication information of the first device and that device exchanged between the first device and that device using the location-limited physical token channel comprises:
contacting each other device in a manner that corresponds to an order that the location-limited physical token channel was provided to each next one of the at least two devices;
confirming whether that device contains requisite authentication information that matches the pre-authentication information stored on the location-limited physical token channel that is identified as being associated with that device;
confirming whether that device contains the at least one secret of an immediately preceding device; and
obtaining the at least one secret of that device that was stored onto the location-limited physical token channel.

According to a further preferred embodiment of the method, establishing for each other device of the at least two devices, secure communications between the first device and that device based on at least the pre-authentication information of the first device and that device exchanged between the first device and that device using the location-limited physical token channel further comprises, for each other device:
confirming whether the first device contains requisite authentication information that matches the pre-authentication information, copied by that device from the location limited physical token channel, that is identified as being associated with the first device.

According to a further preferred embodiment of the method, confirming whether the first device contains requisite authentication information that matches the pre-authentication information, copied by that device from the location limited physical token channel, that is identified as being associated with the first device comprises confirming that the first device contains at least one of a private key or a secret corresponding to the pre-authentication information associated with the first device.

According to a further preferred embodiment of the method, confirming whether that device contains requisite authentication information that matches the pre-authentication information stored on the location-limited physical token channel that is identified as being associated with that device comprises confirming that that device contains at least one of a private key or a secret corresponding to the pre-authentication information associated with that device.

According to a further example of the method, it further comprises the step of generating at least one authentication value for the first device based on the at least one secret stored on the first device, wherein storing at least pre-authentication information of the first device to the location-limited physical token channel further comprises additionally storing the at least one authentication value for the first device to the location-limited physical token channel.

According to a further example of the method, copying at least the pre-authentication information of the first device from the location-limited physical token channel to the current device comprises additionally copying the at least one secret that is stored on the location-limited physical token channel from the location-limited physical token channel to the current device, the method further comprising:
generating at least one authentication value for the current device based on at least the at least one secret copied from the location-limited physical token channel, wherein storing at least pre-authentication information of the first device to the location-limited physical token channel further comprises additionally storing the at least one authentication value for the current device to the location-limited physical token channel.

According to a further example of the method, it further comprises the steps of deleting the at least one secret that is stored on the location-limited physical token channel from the location-limited physical token channel and adding at least one secret stored on the current device to replace the deleted at least one secret.

According to a further example of the method, generating the at least one authentication value for the current device comprises generating the at least one authentication value for the current device based on at least the at least one secret deleted from the location-limited physical token channel and the added at least one secret.

According to a further preferred embodiment of the method, establishing, for each other device of the at least two devices, secure communications between the first device and that device based on at least the pre-authentication information of the first device and that device exchanged between the first device and that device using the location-limited physical token channel comprises:
contacting each other device in a manner that corresponds to an order that the location-limited physical token channel was provided to each next one of the at least two devices;
confirming whether that device contains requisite authentication information that matches the pre-authentication information stored on the location-limited physical token channel that is identified as being associated with that device;
confirming whether that device contains the at least one secret of an immediately preceding device;
obtaining the at least one secret of that device that was stored onto the location-limited physical token channel; and
confirming, for each authentication value stored on the location-limited physical token channel that is identified as being associated with that device, whether that authentication value is valid based on at least the at least one secret of the immediately preceding device obtained from that device.

According to a further preferred embodiment of the method, confirming, for each authentication value stored on the location-limited physical token channel that is identified as being associated with that device, whether that authentication value is valid comprises confirming whether that authentication value is valid additionally based on the at least one secret of that device obtained from that device.

According to a further preferred embodiment of the method, establishing, for each other device of the at least two devices, secure communications between the first device and that device based on at least the pre-authentication information of the first device and that device exchanged between the first device and that device using the location-limited physical token channel further comprises, for each other device:
confirming whether the first device contains requisite authentication information that matches the pre-authentication information, copied by that device from the location limited physical token channel, that is identified as being associated with the first device.

According to a further example of the storage medium, the instructions for establishing, for each other device of the at least two devices, secure communications between the first device and that device based on at least the pre-authentication information of the first device and that device exchanged between the first device and that device using the location-limited physical token channel comprise:
instructions for contacting, for each other device, that device;
instructions for confirming whether that device contains requisite authentication information that matches the pre-authentication information stored on the location-limited physical token channel that is identified as being associated with that device; and
instructions for confirming whether the first device contains requisite authentication information that matches the pre-authentication, copied by that device from the location-limited physical token channel, that is identified as being associated with the first device.

According to a further example of the storage medium, the instructions for confirming whether the first device contains requisite authentication information that matches the pre-authentication information, copied by that device from the location limited physical token channel, that is identified as being associated with the first device comprise instructions for confirming that the first device contains at least one of a private key or a secret corresponding to the pre-authentication information associated with the first device.

According to a further example of the storage medium, the instructions for confirming whether that device contains requisite authentication information that matches the pre-authentication information stored on the location-limited physical token channel that is identified as being associated with that device comprise instructions for confirming that that device contains at least one of a private key or a secret corresponding to the pre-authentication information associated with that device.

According to a further example of the storage medium, the instructions for storing at least pre-authentication information of the first device to the location-limited physical token channel comprise instructions for additionally storing network location information for the first device to the location-limited physical token channel.

According to a further example of the storage medium, the instructions for copying at least the pre-authentication information of the first device from the location-limited physical token channel to another device comprise instructions for additionally copying network location information for the first device from the location-limited physical token channel to the other device.

According to a further example of the storage medium, the instructions for storing at least pre-authentication information of the other device to the location-limited physical token channel comprise instructions for additionally storing network location information for the other device to the location-limited physical token channel.

According to a further example of the storage medium, the instructions for establishing, for each other device of the at least two devices, secure communications between the first device and that device based on at least the pre-authentication information of the first device and that device exchanged between the first device and that device using the location-limited physical token channel comprise:
instructions for contacting, for each other device, that device using the network location information for that device stored on the location-limited physical token channel that is identified as being associated with that device;
instructions for confirming whether that device contains requisite authentication information that matches the pre-authentication information stored on the location-limited physical token channel that is identified as being associated with that device; and
instructions for confirming whether the first device contains requisite authentication information that matches the pre-authentication, copied by that device from the location-limited physical token channel, that is identified as being associated with the first device.

According to a further example of the storage medium, the instructions for confirming whether the first device contains requisite authentication information that matches the pre-authentication information, copied by that device from the location limited physical token channel, that is identified as being associated with the first device comprise instructions for confirming that the first device contains at least one of a private key or a secret corresponding to the pre-authentication information associated with the first device.

According to a further example of the storage medium, the instructions for confirming whether that device contains requisite authentication information that matches the pre-authentication information stored on the location-limited physical token channel that is identified as being associated with that device comprise instructions for confirming that that device contains at least one of a private key or a secret corresponding to the pre-authentication information associated with that device.

According to a further example of the storage medium, the instructions for storing at least pre-authentication information of the other device to the location-limited physical token channel comprise instructions for additionally storing network location information for the other device to the location-limited physical token channel.

According to a further example of the storage medium, the instructions for establishing, for each other device of the at least two devices, secure communications between the first device and that device based on at least the pre-authentication information of the first device and that device exchanged between the first device and that device using the location-limited physical token channel comprise:
instructions for contacting, for each other device, that device using the network location information for that device stored on the location-limited physical token channel that is identified as being associated with that device;
instructions for confirming whether that device contains requisite authentication information that matches the pre-authentication information stored on the location-limited physical token channel that is identified as being associated with that device; and
instructions for confirming whether the first device contains requisite authentication information that matches the pre-authentication, copied by that device from the location-limited physical token channel, that is identified as being associated with the first device.

According to a further example of the storage medium, the instructions for storing at least pre-authentication information of the first device to the location-limited physical token channel comprise instructions for additionally storing at least one secret, stored on the first device, to the location-limited physical token channel.

According to a further example of the storage medium, the instructions for copying at least the pre-authentication information of the first device from the location-limited physical token channel to the other device comprise instructions for additionally copying the at least one secret that is stored on the location-limited physical token channel from the location-limited physical token channel to the other device.

According to a further example of the storage medium, it further comprises:
instructions for deleting the at least one secret that is stored on the location-limited physical token channel from the location-limited physical token channel; and
instructions for replacing the deleted at least one secret with at least one secret stored on the other device.

According to a further example of the storage medium, the instructions for establishing, for each other device of the at least two devices, secure communications between the first device and that device based on at least the pre-authentication information of the first device and that device exchanged between the first device and that device using the location-limited physical token channel comprise:
instructions for contacting each other device in a manner that corresponds to an order that the location-limited physical token channel was provided to each next one of the at least two devices;
instructions for confirming whether that device contains requisite authentication information that matches the pre-authentication information stored on the location-limited physical token channel that is identified as being associated with that device;
instructions for confirming whether that device contains the at least one secret of an immediately preceding device; and
instructions for obtaining the at least one secret of that device that was stored onto the location-limited physical token channel.

According to a further example of the storage medium, the instructions for establishing, for each other device of the at least two devices, secure communications between the first device and that device based on at least the pre-authentication information of the first device and that device exchanged between the first device and that device using the location-limited physical token channel further comprise:
instructions for confirming whether the first device contains requisite authentication information that matches the pre-authentication information, copied by that device from the location limited physical token channel, that is identified as being associated with the first device.

According to a further example of the storage medium, the instructions for confirming whether the first device contains requisite authentication information that matches the pre-authentication information, copied by that device from the location limited physical token channel, that is identified as being associated with the first device comprise instructions for confirming that the first device contains at least one of a private key or a secret corresponding to the pre-authentication information associated with the first device.

According to a further example of the storage medium, the instructions for confirming whether that device contains requisite authentication information that matches the pre-authentication information stored on the location-limited physical token channel that is identified as being associated with that device comprise instructions for confirming that that device contains at least one of a private key or a secret corresponding to the pre-authentication information associated with that device.

According to a further example of the storage medium, it further comprises instructions for generating at least one authentication value for the first device based on the at least one secret stored on the first device, wherein the instructions for storing at least pre-authentication information of the first device to the location-limited physical token channel further comprise instructions for additionally storing the at least one authentication value for the first device to the location-limited physical token channel.

According to a further example of the storage medium, the instructions for copying at least the pre-authentication information of the first device from the location-limited physical token channel to the other device comprise instructions for additionally copying the at least one secret that is stored on the location-limited physical token channel from the location-limited physical token channel to the other device, the set of instructions further comprising:
instructions for generating at least one authentication value for the other device based on at least the at least one secret copied from the location-limited physical token channel, wherein the instructions for storing at least pre-authentication information of the other device to the location-limited physical token channel further comprise instructions for additionally storing the at least one authentication value for the other device to the location-limited physical token channel.

According to a further example of the storage medium, it further comprises:
instructions for deleting the at least one secret that is stored on the location-limited physical token channel from the location-limited physical token channel; and
instructions for adding at least one secret stored on the other device to replace the deleted at least one secret.

According to a further example of the storage medium, the instructions for generating the at least one authentication value for the other device comprise instructions for generating the at least one authentication value for the other device based on at least the at least one secret deleted from the location-limited physical token channel and the added at least one secret.

According to a further example of the storage medium, the instructions for establishing, for each other device of the at least two devices, secure communications between the first device and that device based on at least the pre-authentication information of the first device and that device exchanged between the first device and that device using the location-limited physical token channel comprise:
instructions for contacting each other device in a manner that corresponds to an order that the location-limited physical token channel was provided to each next one of the at least two devices;
instructions for confirming whether that device contains requisite authentication information that matches the pre-authentication information stored on the location-limited physical token channel that is identified as being associated with that device;
instructions for confirming whether that device contains the at least one secret of an immediately preceding device;
instructions for obtaining the at least one secret of that device that was stored onto the location-limited physical token channel; and
instructions for confirming, for each authentication value stored on the location-limited physical token channel that is identified as being associated with that device, whether that authentication value is valid based on at least the at least one secret of the immediately preceding device obtained from that device.

According to a further example of the storage medium, the instructions for confirming, for each authentication value stored on the location-limited physical token channel that is identified as being associated with that device, whether that authentication value is valid comprise instructions for confirming whether that authentication value is valid additionally based on the at least one secret of that device obtained from that device.

## Claims

1. A method for supplying pre-authentication information between at least three devices comprising:
connecting a location-limited physical token channel to a first device, of at least three devices, that contains the pre-authentication information;
storing at least pre-authentication information contained in the first device to the location-limited physical token channel;
disconnecting the location-limited physical token channel from the first device;
connecting the location-limited physical token channel to a next device of the at least three devices, the next device acting as a current device,
storing at least pre-authentication information of the current device to the location-limited physical token channel;
copying at least the pre-authentication information of the previous device from the location-limited physical token channel to the current device;
disconnecting the location-limited physical token channel from the current device;
repeating, for each other device, of the at least three devices, as the current device, the connecting the location-limited physical token channel, storing at least pre-authentication information of the current device, copying at least the pre-authentication information of the previous device from the location-limited physical token channel to the current device, and current device disconnecting steps;
reconnecting the location-limited physical token channel to the first device;
copying at least the pre-authentication information of each other device of the at least three devices from the location-limited physical token channel to the first device; and
establishing, for each other device of the at least three devices, secure communications between the first device and that device based on at least the pre-authentication information of the first device and that device exchanged between the first device and that device using the location-limited physical token channel,
wherein establishing, for each other device of the at least three devices, secure communications between the first device and that device based on at least the pre-authentication information of the first device and that device exchanged between the first device and that device using the location-limited physical token channel comprises the following steps, which are performed by the first device:
contacting each other device in a manner that corresponds to an order that the location-limited physical token channel was provided to each next one of the at least three devices;
confirming whether that device contains requisite authentication information that matches the pre-authentication information stored on the location-limited physical token channel that is identified as being associated with that device;
confirming whether that device contains at least one secret of an immediately preceding device; and
obtaining at least one secret of that device that was stored onto the location-limited physical token channel.

2. The method according to claim 1, wherein establishing, for each other device of the at least first and second devices, secure communications between the first device and that device based on at least the pre-authentication information of the first device and that device exchanged between the first device and that device using the location-limited physical token channel comprises, for each other device:
contacting that device;
confirming whether that device contains requisite authentication information that matches the pre-authentication information stored on the location-limited physical token channel that is identified as being associated with that device.

3. The method according to claim 2, wherein establishing, for each other device of the at least first and second devices, secure communications between the first device and that device based on at least the pre-authentication information of the first device and that device exchanged between the first device and that device using the location-limited physical token channel further comprises, for each other device:
confirming whether the first device contains requisite authentication information that matches the pre-authentication information, copied by that device from the location limited physical token channel that is identified as being associated with the first device.

4. The method according to claim 3, wherein confirming whether the first device contains requisite authentication information that matches the pre-authentication information, copied by that device from the location limited physical token channel, that is identified as being associated with the first device comprises:
confirming that the first device contains at least one of a private key or a secret corresponding to the pre-authentication information associated with the first device.

5. The method according to claim 2, wherein confirming whether that device contains requisite authentication information that matches the pre-authentication information stored on the location-limited physical token channel that is identified as being associated with that device comprises:
confirming that that device contains at least one of a private key or a secret corresponding to the pre-authentication information associated with that device.

6. A computer-readable medium that stores instructions, which cause at least a portion of a computer system to perform the following steps:
connecting a location-limited physical token channel to a first device, of at least three devices, that contains the pre-authentication information;
storing at least pre-authentication information contained in the first device to the location-limited physical token channel;
disconnecting the location-limited physical token channel from the first device;
connecting the location-limited physical token channel to a next device of the at least three devices, the next device acting as a current device,
storing at least pre-authentication information of the current device to the location-limited physical token channel;
copying at least the pre-authentication information of the previous device from the location-limited physical token channel to the current device;
disconnecting the location-limited physical token channel from the current device;
repeating, for each other device, of the at least three devices, as the current device, the connecting the location-limited physical token channel, storing at least pre-authentication information of the current device and copying at least the pre-authentication information of the previous device from the location-limited physical token channel to the current device, and current device disconnecting steps;
reconnecting the location-limited physical token channel to the first device;
copying at least the pre-authentication information of each other device of the at least three devices from the location-limited physical token channel to the first device; and
establishing, for each other device of the at least three devices, secure communications between the first device and that device based on at least the pre-authentication information of the first device and that device exchanged between the first device and that device using the location-limited physical token channel,
wherein, establishing, for each other device of the at least three devices, secure communications between the first device and that device based on at least the pre-authentication information of the first device and that device exchanged between the first device and that device using the location-limited physical token channel comprises the following steps, which are performed by the first device:
contacting each other device in a manner that corresponds to an order that the location-limited physical token channel was provided to each next one of the at least three devices;
confirming whether that device contains requisite authentication information that matches the pre-authentication information stored on the location-limited physical token channel that is identified as being associated with that device;
confirming whether that device contains at least one secret of an immediately preceding device; and
obtaining at least one secret of that device that was stored onto the location-limited physical token channel.

## Patentansprüche

1. Verfahren zum Bereitstellen von Pre-Authentifizierungsinformationen zwischen zumindest drei Geräten, wobei das Verfahren Folgendes umfasst:
Verbinden eines ortsbegrenzten physikalischen Zeichenkanals ("token channel") zu einem ersten Gerät von zumindest drei Geräten, wobei das erste Gerät die Pre-Authentifizierungsinformationen beinhaltet;
Speichern von zumindest Pre-Authentifizierungsinformationen, die im ersten Gerät beinhaltet sind, im ortsbegrenzten physikalischen Zeichenkanal;
Lösen der Verbindung zwischen dem ortsbegrenzten physikalischen Zeichenkanal und dem ersten Gerät;
Verbinden des ortbegrenzten physikalischen Zeichenkanals mit einem nächsten Gerät der zumindest drei Geräte, wobei das nächste Gerät als gegenwärtiges Gerät agiert;
Speichern von zumindest Pre-Authentifizierungsinformationen des gegenwärtigen Gerätes im ortsbegrenzten physikalischen Zeichenkanal;
Kopieren von zumindest Pre-Authentifizierungsinformationen des vorigen Gerätes vom ortsbegrenzten physikalischen Zeichenkanal zum gegenwärtigen Gerät;
Lösen der Verbindung zwischen dem ortsbegrenzten physikalischen Zeichenkanal und dem gegenwärtigen Gerät;
Wiederholen, für jedes andere Gerät der zumindest drei Geräte, als gegenwärtiges Gerät, die Schritte des Verbindens des ortsbegrenzten physikalischen Zeichenkanals, Speichems von zumindest Pre-Authentifizierungsinformationen des gegenwärtigen Gerätes, Kopierens von zumindest Pre-Authentifizierungsinformationen des vorigen Gerätes vom ortsbegrenzten physikalischen Zeichenkanal zum gegenwärtigen Gerät und Lösens der Verbindung des gegenwärtigen Gerätes;
erneutes Verbinden des ortsbegrenzten physikalischen Zeichenkanals mit dem ersten Gerät;
Kopieren von zumindest Pre-Authentifizierungsinformationen jedes anderen Gerätes der zumindest drei Geräte vom ortsbegrenzten physikalischen Zeichenkanal zum ersten Gerät; und
Herstellen, für jedes andere Gerät der zumindest drei Geräte, von sicheren Kommunikationen zwischen dem ersten Gerät und diesem Gerät, basierend auf zumindest den Pre-Authentifizierungsinformationen des ersten Gerätes und dieses Gerätes, die zwischen dem ersten Gerät und diesem Gerät mittels des ortbegrenzten physikalischen Zeichenkanals ausgetauscht worden sind,
wobei der Schritt des Herstellens, für jedes andere Gerät der zumindest drei Geräte, von sicheren Kommunikationen zwischen dem ersten Gerät und diesem Gerät, basierend auf zumindest Pre-Authentifizierungsinformationen des ersten Gerätes und dieses Gerätes, die zwischen dem ersten Gerät und diesem Gerät mittels des ortsbegrenzten physikalischen Zeichenkanals ausgetauscht worden sind, die folgenden Schritte umfasst, die durch das erste Gerät ausgeführt werden:
Kontaktieren jedes anderen Gerätes auf eine Weise, die einer Ordnung entspricht, mit der der ortsbegrenzte physikalische Zeichenkanal zu jedem nächsten der zumindest drei Geräte bereitgestellt wurde;
Bestätigen, ob dieses Gerät erforderliche Authentifizierungsinformationen beinhaltet, die mit den Pre-Authentifizierungsinformationen übereinstimmen, die auf dem ortsbegrenzten physikalischen Zeichenkanal gespeichert sind und als mit diesem Gerät verbunden **gekennzeichnet** sind;
Bestätigen, ob dieses Gerät zumindest ein Geheimnis eines unmittelbar vorherigen Gerätes beinhaltet;
Erhalten zumindest eines Geheimnisses dieses Gerätes, das auf dem ortsbegrenzten physikalischen Zeichenkanal gespeichert war.

2. Verfahren gemäß Anspruch 1, wobei der Schritt des Herstellens, für jedes andere Gerät des zumindest ersten und zweiten Gerätes, von sicheren Kommunikationen zwischen dem ersten Gerät und diesem Gerät, basierend auf zumindest den Pre-Authentifizierungsinformationen des ersten Gerätes und dieses Gerätes, die zwischen dem ersten Gerät und diesem Gerät mittels des ortsbegrenzten physikalischen Zeichenkanals ausgetauscht worden sind, folgende Schritte umfasst, für jedes andere Gerät:
Kontaktieren dieses Gerätes;
Bestätigen, ob dieses Gerät erforderliche Authentifizierungsinformationen beinhaltet, die mit den Pre-Authentifizierungsinformationen übereinstimmen, die auf dem ortsbegrenzten physikalischen Zeichenkanal gespeichert sind und als mit diesem Gerät verbunden **gekennzeichnet** sind.

3. Verfahren gemäß Anspruch 2, wobei der Schritt des Herstellens, für jedes andere Gerät des zumindest ersten und zweiten Gerätes, von sicheren Kommunikationen zwischen dem ersten Gerät und diesem Gerät, basierend auf zumindest Pre-Authentifizierungsinformationen des ersten Gerätes und dieses Gerätes, die zwischen dem ersten Gerät und diesem Gerät mittels des ortsbegrenzten physikalischen Zeichenkanals ausgetauscht worden sind, weiterhin folgende Schritte umfasst, für jedes andere Gerät:
Bestätigen, ob das erste Gerät erforderliche Authentifizierungsinformationen beinhaltet, die mit den Pre-Authentifizierungsinformationen übereinstimmen, die von diesem Gerät vom ortsbegrenzten physikalischen Zeichenkanal kopiert worden sind und als mit dem ersten Gerät verbunden **gekennzeichnet** sind.

4. Verfahren gemäß Anspruch 3, wobei der Schritt des Bestätigens, ob das erste Gerät erforderliche Authentifizierungsinformationen beinhaltet, die mit den Pre-Authentifizierungsinformationen übereinstimmen, die von diesem Gerät vom ortsbegrenzten physikalischen Zeichenkanal kopiert worden sind und als mit dem ersten Gerät verbunden **gekennzeichnet** sind, Folgendes umfasst:
Bestätigen, dass das erste Gerät zumindest einen von einem privaten Schlüssel oder einem Geheimnis beinhaltet, der den Pre-Authentifizierungsinformationen entspricht, die mit dem ersten Gerät verbunden sind.

5. Verfahren gemäß Anspruch 2, wobei der Schritt des Bestätigens, ob dieses Gerät erforderliche Authentifizierungsinformationen beinhaltet, die mit den Pre-Authentifizierungsinformationen übereinstimmen, die auf dem ortsbegrenzten physikalischen Zeichenkanal gespeichert sind und als mit diesem Gerät verbunden **gekennzeichnet** sind, Folgendes umfasst:
Bestätigen, dass dieses Gerät zumindest einen von einem privaten Schlüssel oder einem Geheimnis beinhaltet, der den Pre-Authentifizierungsinformationen entspricht, die mit diesem Gerät verbunden sind.

6. Computer-lesbarer Datenträger zum Speichern von Instruktionen, die zumindest einen Teil eines Computersystems dazu veranlassen, folgende Schritte auszuführen:
Verbinden eines ortsbegrenzten physikalischen Zeichenkanals ("token channel") zu einem ersten Gerät von zumindest drei Geräten, wobei das erste Gerät die Pre-Authentifizierungsinformationen beinhaltet;
Speichern von zumindest Pre-Authentifizierungsinformationen, die im ersten Gerät beinhaltet sind, im ortsbegrenzten physikalischen Zeichenkanal;
Lösen der Verbindung zwischen dem ortsbegrenzten physikalischen Zeichenkanal und dem ersten Gerät;
Verbinden des ortbegrenzten physikalischen Zeichenkanals mit einem nächsten Gerät der zumindest drei Geräte, wobei das nächste Gerät als gegenwärtiges Gerät agiert;
Speichern von zumindest Pre-Authentifizierungsinformationen des gegenwärtigen Gerätes im ortsbegrenzten physikalischen Zeichenkanal;
Kopieren von zumindest Pre-Authentifizierungsinformationen des vorigen Gerätes vom ortsbegrenzten physikalischen Zeichenkanal zum gegenwärtigen Gerät;
Lösen der Verbindung zwischen dem ortsbegrenzten physikalischen Zeichenkanal und dem gegenwärtigen Gerät;
Wiederholen, für jedes andere Gerät der zumindest drei Geräte, als gegenwärtiges Gerät, die Schritte des Verbindens des ortsbegrenzten physikalischen Zeichenkanals, Speichems von zumindest Pre-Authentifizierungsinformationen des gegenwärtigen Gerätes, Kopierens von zumindest Pre-Authentifizierungsinformationen des vorigen Gerätes vom ortsbegrenzten physikalischen Zeichenkanal zum gegenwärtigen Gerät und Lösens der Verbindung des gegenwärtigen Gerätes;
erneutes Verbinden des ortsbegrenzten physikalischen Zeichenkanals mit dem ersten Gerät;
Kopieren von zumindest Pre-Authentifizierungsinformationen jedes anderen Gerätes der zumindest drei Geräte vom ortsbegrenzten physikalischen Zeichenkanal zum ersten Gerät; und
Herstellen, für jedes andere Gerät der zumindest drei Geräte, von sicheren Kommunikationen zwischen dem ersten Gerät und diesem Gerät, basierend auf zumindest den Pre-Authentifizierungsinformationen des ersten Gerätes und dieses Gerätes, die zwischen dem ersten Gerät und diesem Gerät mittels des ortbegrenzten physikalischen Zeichenkanals ausgetauscht worden sind,
wobei der Schritt des Herstellens, für jedes andere Gerät der zumindest drei Geräte, von sicheren Kommunikationen zwischen dem ersten Gerät und diesem Gerät, basierend auf zumindest Pre-Authentifizierungsinformationen des ersten Gerätes und dieses Gerätes, die zwischen dem ersten Gerät und diesem Gerät mittels des ortsbegrenzten physikalischen Zeichenkanals ausgetauscht worden sind, die folgenden Schritte umfasst, die durch das erste Gerät ausgeführt werden:
Kontaktieren jedes anderen Gerätes auf eine Weise, die einer Ordnung entspricht, mit der der ortsbegrenzte physikalische Zeichenkanal zu jedem nächsten der zumindest drei Geräte bereitgestellt wurde;
Bestätigen, ob dieses Gerät erforderliche Authentifizierungsinformationen beinhaltet, die mit den Pre-Authentifizierungsinformationen übereinstimmen, die auf dem ortsbegrenzten physikalischen Zeichenkanal gespeichert sind und als mit diesem Gerät verbunden **gekennzeichnet** sind;
Bestätigen, ob dieses Gerät zumindest ein Geheimnis eines unmittelbar vorherigen Gerätes beinhaltet;
Erhalten zumindest eines Geheimnisses dieses Gerätes, das auf dem ortsbegrenzten physikalischen Zeichenkanal gespeichert war.

## Revendications

1. Procédé de fourniture d'informations de pré-authentification entre au moins trois dispositifs comprenant le fait de:
connecter un canal de token physique à emplacement limité à un premier dispositif, parmi au moins trois dispositifs, qui contient les informations de pré-authentification;
stocker au moins les informations de pré-authentification contenues dans le premier dispositif dans le canal de token physique à emplacement limité;
déconnecter le canal de token physique à emplacement limité du premier dispositif;
connecter le canal de token physique à emplacement limité à un dispositif suivant parmi les au moins trois dispositifs, le dispositif suivant agissant en tant que dispositif actuel,
stocker au moins les informations de pré-authentification du dispositif actuel dans le canal de token physique à emplacement limité;
copier au moins les informations de pré-authentification du dispositif précédent depuis le canal de token physique à emplacement limité au dispositif actuel;
déconnecter le canal de token physique à emplacement limité du dispositif actuel;
répéter, pour chaque autre dispositif, parmi les au moins trois dispositifs, en tant que dispositif actuel, les étapes qui consistent à connecter le canal de token physique à emplacement limité, à stocker au moins les informations de pré-authentification du dispositif actuel, à copier au moins les informations de pré-authentification du dispositif précédent depuis le canal de token physique à emplacement limité au dispositif actuel, et à déconnecter le dispositif actuel;
reconnecter le canal de token physique à emplacement limité au premier dispositif;
copier au moins les informations de pré-authentification de chaque autre dispositif parmi les au moins trois dispositifs du canal de token physique à emplacement limité au premier dispositif; et
établir, pour chaque autre dispositif parmi les au moins trois dispositifs, des communications sécurisées entre le premier dispositif et ce dispositif sur la base d'au moins les informations de pré-authentification du premier dispositif et ce dispositif échangées entre le premier dispositif et ce dispositif en utilisant le canal de token physique à emplacement limité,
où l'établissement, pour chaque autre dispositif parmi les au moins trois dispositifs, de communications sécurisées entre le premier dispositif et ce dispositif sur la base d'au moins les informations de pré-authentification du premier dispositif et ce dispositif échangées entre le premier dispositif et ce dispositif en utilisant le canal de token physique à emplacement limité comprend les étapes suivantes, qui sont exécutées par le premier dispositif, qui consistent à :
mettre en contact chaque autre dispositif d'une manière qui correspond à un ordre dans lequel le canal de token physique à emplacement limité a été fourni à chaque dispositif suivant parmi les au moins trois dispositifs;
confirmer si ce dispositif contient des informations d'authentification requises qui correspondent aux informations de pré-authentification stockées sur le canal de token physique à emplacement limité qui sont identifiées comme étant associées à ce dispositif;
confirmer si ce dispositif contient au moins un secret d'un dispositif immédiatement précédent; et
obtenir au moins un secret de ce dispositif qui a été stocké sur le canal de token physique à emplacement limité.

2. Procédé selon la revendication 1, dans lequel l'établissement, pour chaque autre dispositif parmi les au moins premier et deuxième dispositifs, de communications sécurisées entre le premier dispositif et ce dispositif sur la base d'au moins les informations de pré-authentification du premier dispositif et ce dispositif échangées entre le premier dispositif et ce dispositif en utilisant le canal de token physique à emplacement limité comprend, pour chaque autre dispositif, le fait de:
contacter ce dispositif;
confirmer si ce dispositif contient les informations d'authentification requises qui correspondent aux informations de pré-authentification stockées sur le canal de token physique à emplacement limité qui sont identifiées comme étant associées à ce dispositif.

3. Procédé selon la revendication 2, dans lequel l'établissement, pour chaque autre dispositif parmi les au moins premier et deuxième dispositifs, des communications sécurisées entre le premier dispositif et ce dispositif sur la base d'au moins les informations de pré-authentification du premier dispositif et ce dispositif échangées entre le premier dispositif et ce dispositif en utilisant le canal de token physique à emplacement limité comprend en plus, pour chaque autre dispositif, le fait de :
confirmer si le premier dispositif contient les informations d'authentification requises qui correspondent aux informations de pré-authentification, copiées par ce dispositif depuis le canal de token physique à emplacement limité qui sont identifiées comme étant associées au premier dispositif.

4. Procédé selon la revendication 3, dans lequel le fait de confirmer si le premier dispositif contient les informations d'authentification requises qui correspondent aux informations de pré-authentification, copiées par ce dispositif depuis le canal de token physique à emplacement limité, qui sont identifiées comme étant associées au premier dispositif, comprend le fait de:
confirmer que le premier dispositif contient au moins l'un d'une clé privée ou d'un secret correspondant aux informations de pré-authentification associées au premier dispositif.

5. Procédé selon la revendication 2, dans lequel le fait de confirmer si ce dispositif contient les informations d'authentification requises qui correspondent aux informations de pré-authentification stockées sur le canal de token physique à emplacement limité qui sont identifiées comme étant associées à ce dispositif comprend le fait de:
confirmer que ce dispositif contient au moins l'un d'une clé privée ou d'un secret correspondant aux informations de pré-authentification associées à ce dispositif.

6. Support lisible par ordinateur qui stocke des instructions, qui amènent au moins une partie d'un système informatique à exécuter les étapes suivantes :
connecter un canal de token physique à emplacement limité à un premier dispositif, parmi les au moins trois dispositifs, qui contient les informations de pré-authentification;
stocker au moins les informations de pré-authentification contenues dans le premier dispositif dans le canal de token physique à emplacement limité;
déconnecter le canal de token physique à emplacement limité du premier dispositif;
connecter le canal de token physique à emplacement limité à un dispositif suivant parmi les au moins trois dispositifs, le dispositif suivant agissant en tant que dispositif actuel,
stocker au moins les informations de pré-authentification du dispositif actuel dans le canal de token physique à emplacement limité;
copier au moins les informations de pré-authentification du dispositif précédent depuis le canal de token physique à emplacement limité au dispositif actuel;
déconnecter le canal de token physique à emplacement limité du dispositif actuel;
répéter, pour chaque autre dispositif, parmi les au moins trois dispositifs, en tant que dispositif actuel, les étapes qui consistent à connecter le canal de token physique à emplacement limité, stocker au moins les informations de pré-authentification du dispositif actuel et copier au moins les informations de pré-authentification du dispositif précédent depuis le canal de token physique à emplacement limité au dispositif actuel, et déconnecter le dispositif actuel;
reconnecter le canal de token physique à emplacement limité au premier dispositif;
copier au moins les informations de pré-authentification de chaque autre dispositif parmi les au moins trois dispositifs depuis le canal de token physique à emplacement limité au premier dispositif; et
établir, pour chaque autre dispositif parmi les au moins trois dispositifs, des communications sécurisées entre le premier dispositif et ce dispositif sur la base d'au moins les informations de pré-authentification du premier dispositif et ce dispositif échangées entre le premier dispositif et ce dispositif en utilisant le canal de token physique à emplacement limité,
où l'établissement, pour chaque autre dispositif parmi les au moins trois dispositifs, de communications sécurisées entre le premier dispositif et ce dispositif sur la base d'au moins les informations de pré-authentification du premier dispositif et ce dispositif échangées entre le premier dispositif et ce dispositif en utilisant le canal de token physique à emplacement limité comprend les étapes suivantes, qui sont exécutées par le premier dispositif, qui consistent à :
mettre en contact chaque autre dispositif d'une manière qui correspond à un ordre dans lequel le canal de token physique à emplacement limité a été fourni à chaque dispositif suivant parmi les au moins trois dispositifs;
confirmer si ce dispositif contient des informations d'authentification requises qui correspondent aux informations de pré-authentification stockées sur le canal de token physique à emplacement limité qui sont identifiées comme étant associées à ce dispositif;
confirmer si ce dispositif contient au moins un secret d'un dispositif immédiatement précédent; et
obtenir au moins un secret de ce dispositif qui a été stocké sur le canal de token physique à emplacement limité.
